(19) **Europäisches Patentamt / European Patent Office / Office européen des brevets**

(11) **EP 3 501 005 B1**

(12) **EUROPEAN PATENT SPECIFICATION**

(45) Date of publication and mention of the grant of the patent:
**02.10.2024 Bulletin 2024/40**

(21) Application number: **17764666.8**

(22) Date of filing: **04.08.2017**

(51) International Patent Classification (IPC):
**G06T 9/00** *(2006.01)*

(52) Cooperative Patent Classification (CPC):
**G06T 9/001; G06T 9/004; G06T 9/005; G06T 9/007**

(86) International application number:
**PCT/JP2017/029238**

(87) International publication number:
**WO 2018/034253 (22.02.2018 Gazette 2018/08)**

(54) **METHOD, ENCODER SYSTEM AND NON-TRANSITORY COMPUTER READABLE RECORDING MEDIUM STORING THEREON PROGRAM FOR ENCODING POINT CLOUD OF REPRESENTING SCENE**

VERFAHREN, CODIERERSYSTEM UND NICHTFLÜCHTIGES COMPUTERLESBARES AUFZEICHNUNGSMEDIUM MIT DARAUF GESPEICHERTEM PROGRAMM ZUM CODIEREN EINER PUNKTWOLKE EINER DARGESTELLTEN SZENE

PROCÉDÉ, SYSTÈME CODEUR ET SUPPORT D'ENREGISTREMENT LISIBLE PAR ORDINATEUR NON TRANSITOIRE STOCKANT UN PROGRAMME POUR CODER UN NUAGE DE POINTS REPRÉSENTANT UNE SCÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2016 US 201615241112**

(43) Date of publication of application:
**26.06.2019 Bulletin 2019/26**

(73) Proprietor: **Mitsubishi Electric Corporation**
**Chiyoda-ku**
**Tokyo 100-8310 (JP)**

(72) Inventors:
- **COHEN, Robert**
  **Cambridge, MA 02139 (US)**
- **KRIVOKUCA, Maja**
  **Cambridge, MA 02139 (US)**
- **VETRO, Anthony**
  **Cambridge, MA 02139 (US)**
- **FENG, Chen**
  **Cambridge, MA 02139 (US)**
- **TAGUCHI, Yuichi**
  **Cambridge, MA 02139 (US)**

(74) Representative: **Pfenning, Meinig & Partner mbB Patent- und Rechtsanwälte**
**Theresienhöhe 11a**
**80339 München (DE)**

(56) References cited:
**US-A1- 2009 018 801**

- **COHEN ROBERT A ET AL: "Representation and coding of large-scale 3D dynamic maps", PROCEEDINGS OPTICAL DIAGNOSTICS OF LIVING CELLS II, SPIE, US, vol. 9971, 27 September 2016 (2016-09-27), pages 99710T - 99710T, XP060078035, ISSN: 0277-786X, ISBN: 978-1-5106-1354-6, DOI: 10.1117/12.2237755**
- **MORELL VICENTE ET AL: "Geometric 3D point cloud compression", PATTERN RECOGNITION LETTERS, ELSEVIER, AMSTERDAM, NL, vol. 50, 12 June 2014 (2014-06-12), pages 55 - 62, XP029075224, ISSN: 0167-8655, DOI: 10.1016/J.PATREC.2014.05.016**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- FABIO REMONDINO: "From point cloud to surface: the modeling and visualization problem", INTERNATIONAL ARCHIVES OF PHOTOGRAMMETRY, REMOTE SENSING AND SPATIAL INFORMATION SCIENCES, 2003, VOL. 34, NO 5, P. W10., 1 January 2003 (2003-01-01), pages 1 - 11, XP055344282, DOI: 10.3929/ethz-a-004655782
- PENGBO BO ET AL: "A revisit to fitting parametric surfaces to point clouds", COMPUTERS AND GRAPHICS, ELSEVIER, GB, vol. 36, no. 5, 17 March 2012 (2012-03-17), pages 534 - 540, XP028483305, ISSN: 0097-8493, [retrieved on 20120401], DOI: 10.1016/J.CAG.2012.03.036
- SUNG-BUM PARK ET AL: "Multiscale Representation and Compression of 3-D Point Data", IEEE TRANSACTIONS ON MULTIMEDIA, IEEE SERVICE CENTER, PISCATAWAY, NJ, US, vol. 11, no. 1, 1 January 2009 (2009-01-01), pages 177 - 183, XP011346575, ISSN: 1520-9210, DOI: 10.1109/TMM.2008.2008868
- COHEN ROBERT A ET AL: "Point Cloud Attribute Compression Using 3-D Intra Prediction and Shape-Adaptive Transforms", 2016 DATA COMPRESSION CONFERENCE (DCC), IEEE, 30 March 2016 (2016-03-30), pages 141 - 150, XP033027696, DOI: 10.1109/DCC.2016.67
- SMITH J ET AL: "Progressive encoding and compression of surfaces generated from point cloud data", COMPUTERS AND GRAPHICS, ELSEVIER, GB, vol. 36, no. 5, 17 March 2012 (2012-03-17), pages 341 - 348, XP028483284, ISSN: 0097-8493, [retrieved on 20120329], DOI: 10.1016/J.CAG.2012.03.032

**Description**

[Technical Field]

The invention relates generally to a method for compressing point cloud geometries, and more particularly to a method for predictive encoding the point cloud geometries.

[Background Art]

Point clouds can include a set of points in a 3-D space. For example, a given point may have a specific (x,y,z) coordinate specifying its location or geometry. The point locations can be located anywhere in 3-D space, with a resolution determined by the sensor resolution or by any preprocessing performed to generate the point cloud. For fine resolutions, or for coarse resolutions with point clouds spanning a large 3-D space, integer or floating-point binary representations of point locations can require several bits. Storing or signaling every coordinate with high precision allows the capture system to save the point cloud coordinates with high fidelity; however, such representations can consume massive amounts of storage space when saving or bandwidth when signaling. There is a need, therefore, to reduce the number of bits needed to represent the point cloud locations or geometries for subsequent storage or transmission. Even with compression, the size of the compressed representation can be quite large; therefore, there is also a need for a compressed representation that allows one to quickly or easily decode and reconstruct a coarse representation of the point cloud geometry without having to decode the entire file or bit-stream.

US 2009/0018801 A1 discloses method of compressing a stream of input data elements to produce an output data stream, the method comprising the steps of: selecting at least one model, from a set of predetermined mathematical models, each mathematical model parameterizing a space with a set of model specific coordinates, the coordinates represented by a tuple of at least one coordinate values, and outputting for each selected model parameters comprising a map, from a tuple of coordinate values in the model space to an approximating set of data values for at least one subportion of the data elements, and determining, for at least one subportion of the data elements, a label indicating a selected model, and the values of a tuple of model coordinates which map to a tuple of data values which, according to some measure of merit, best approximate the subportion of the data elements.

[Summary of Invention]

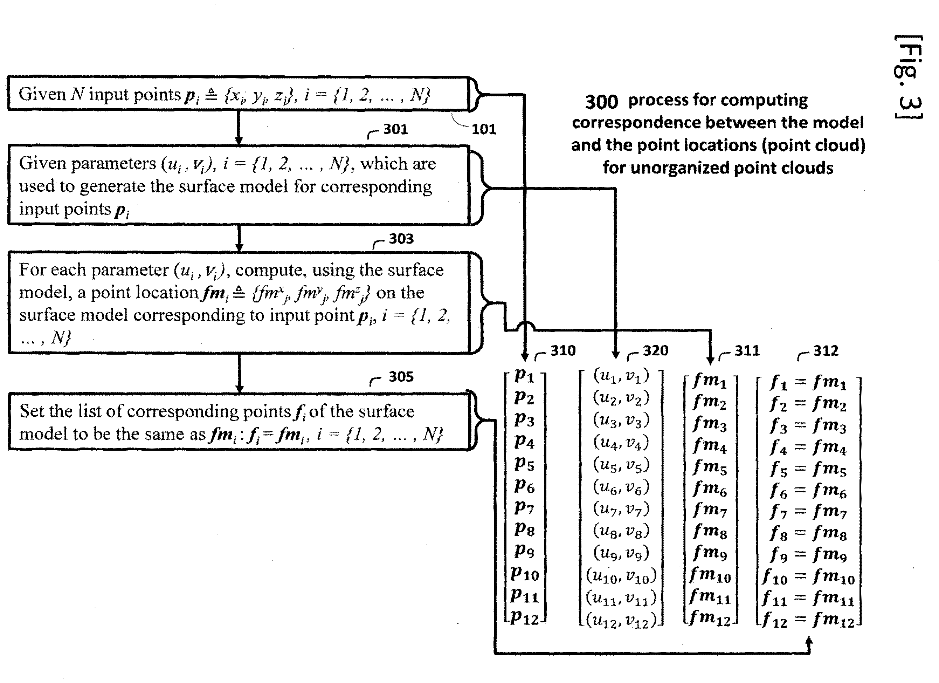

The present invention is defined by the appended set of claims. Some embodiments of the invention are based on recognition that a point cloud can be effectively encoded by parameterizing a given surface and fitting the parameterized surface on to the point cloud. The example with regard to FIG.3, Para.[0030], [0040]-[0043], is not part of the invention and is provided for illustrative purposes only to support a better understanding of the invention.

[Brief Description of Drawings]

[Fig. 1]

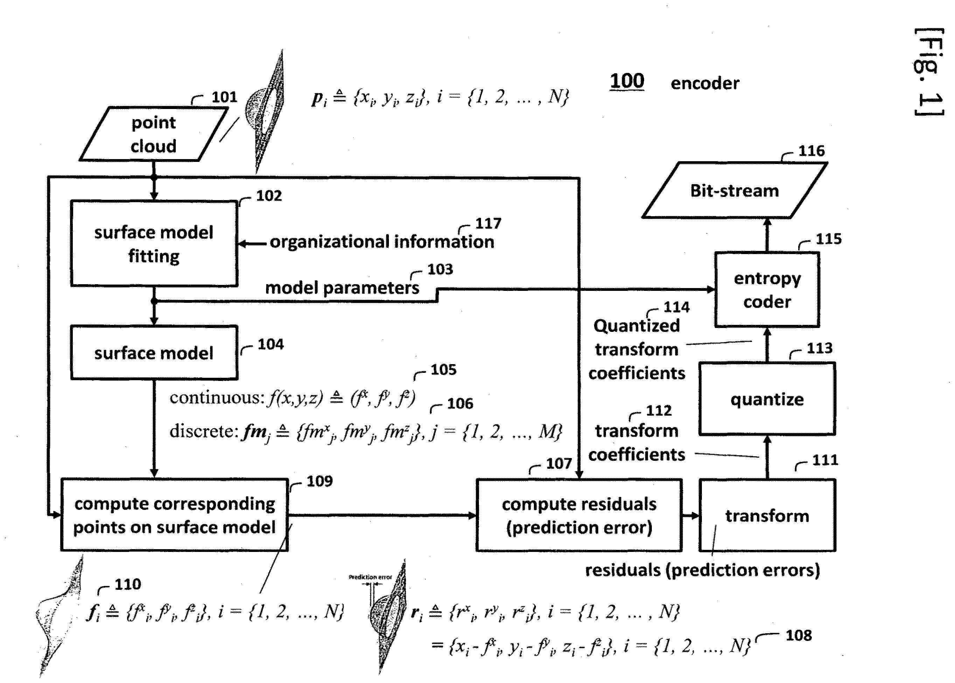

Fig. 1 is a block diagram of an encoding process according to the embodiments of the invention.
[Fig. 2]

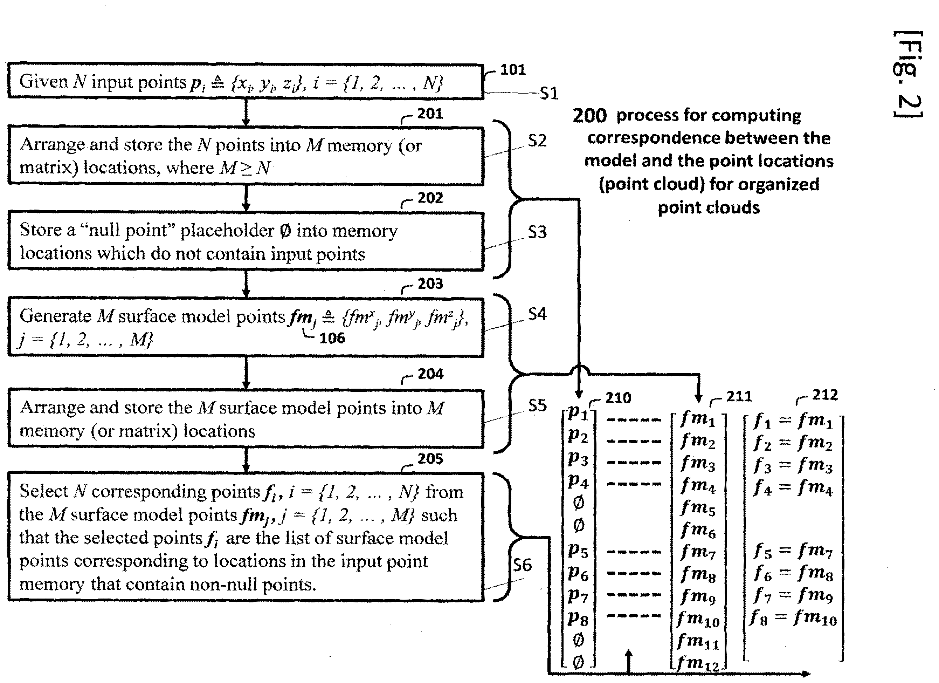

Fig. 2 is a block diagram of a process for computing a correspondence between a surface model and point locations for organized point clouds according to the embodiments of the invention.
[Fig. 3]
Fig. 3 is a block diagram of a process not part of the claimed invention for computing a correspondence between a surface model and point locations for unorganized point clouds .
[Fig. 4]

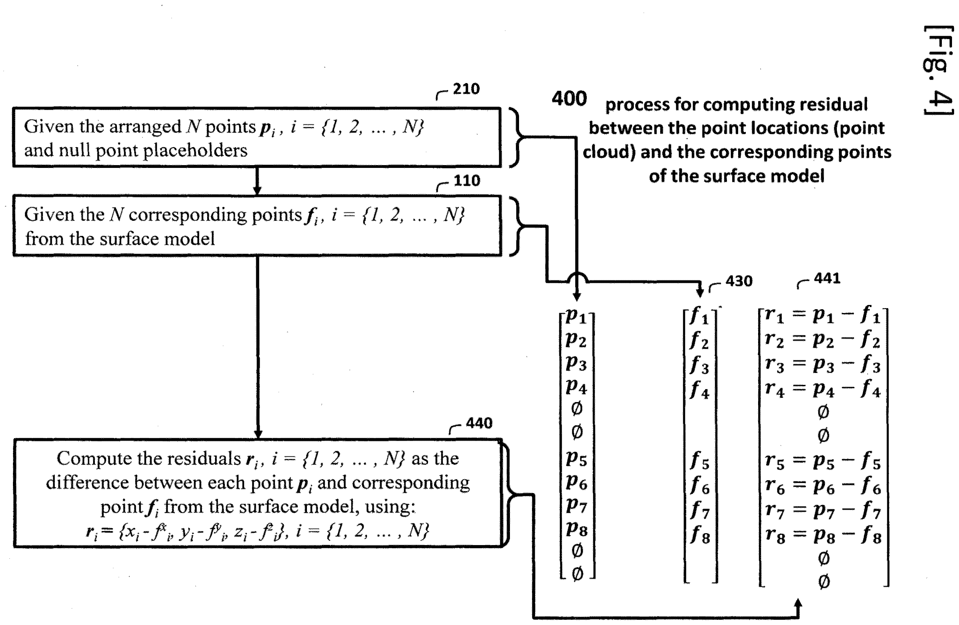

Fig. 4 is a process for computing the residual between point locations and corresponding points of a surface model according to the embodiments of the invention.
[Fig. 5]

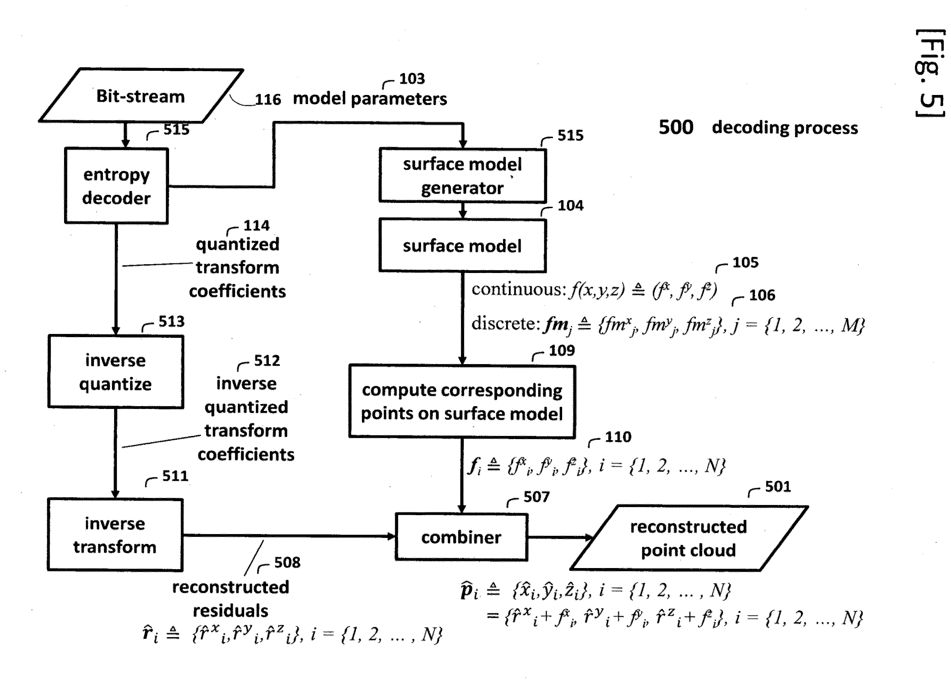

Fig. 5 is a diagram of a decoding process according to the embodiments of the invention .
[Fig. 6]

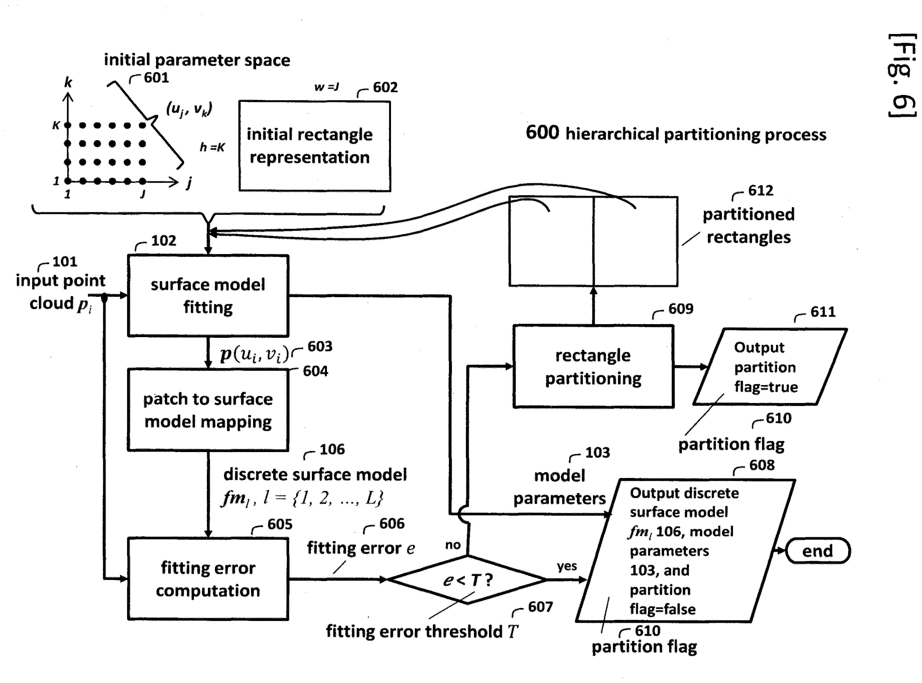

Fig. 6 is a diagram of a hierarchical partitioning process according to the embodiments of the invention.

[Description of Embodiments]

The example with regard to FIG.3, Para.[0030], [0040]-[0043], describing an unorganized point cloud, is not part of the invention and is provided for illustrative purposes only to support a better understanding of the invention. Various embodiments of the present invention are described hereafter with reference to the figures. It would be noted that the figures are not drawn to scale elements of similar structures or functions are represented by like reference numerals throughout the figures. It should be also noted that the figures are only intended to facilitate the description of specific embodiments of the invention. They are not intended as an exhaustive description of the invention or as a limitation on the scope of the invention. In addition, an aspect described in conjunction with a particular embodiment of the invention is not necessarily limited to that embodiment and can be practiced in any other embodiments of the invention.

The embodiments of the invention provide a method and system for compressing three-dimensional (3D) points cloud using parametric models of surfaces fitted onto a cloud or set of points that serve as predictors of point locations of the 3D points, and achieving compression by quantizing and signaling the parameters and/or prediction errors.

Some embodiments disclose a method for encoding a point cloud of representing a scene using an encoder including a processor in communication with a memory, wherein each point of the point cloud is a location in a three-dimensional (3D) space, including steps of fitting a parameterized surface onto the point cloud formed by input points; generating model parameters from the parameterized surface; computing corresponding points on the parameterized surface, wherein the corresponding points correspond to the input points; computing residual data based on the corresponding points and the input points of the point cloud; compressing the model parameters and the residual data to yield coded model parameters and coded residual data; and producing a bit-stream from the coded model parameters of the parameterized surface and the coded residual data.

**Encoding Process**

Fig. 1 is a block diagram of an encoding process performed by an encoder 100 according to some embodiments of the invention. The encoder 100 includes a processor (not shown) in communication with a memory (not shown) for performing the encoding process.

An input to the encoder 100 is a point cloud which comprises a set of $N$ points $p_i$, $i = \{1, 2, ..., N\}$ 101, where each $p_i$ is a point location in 3-D space. A point location can be represented by a coordinate in 3-D space. For example, when using the Cartesian coordinate system, $p_i$ can be represented by a triplet $\{x_i, y_i, z_i\}$, where $x_i, y_i, z_i$ are the coordinates of the point. In another example a spherical coordinate system can be used, in which each point $p_i$ is represented by a triplet $\{r_i, \theta_i, \varphi_i\}$, where $r_i$ denotes a radial distance, $\theta_i$ denotes a polar angle, and $\varphi_i$ represents an azimuthal angle for a point.

For a set or subset of input points $p_i$ 101, a surface model fitting process 102 computes a surface model which approximates the locations of the input points $p_i$ 101 or the surface of the object that is represented by the input points. For example, if the input points are a representation or boundary locations of a spherical object in 3-D space, then the surface model 104 can be the equation of a sphere, having two parameters: A radius and a coordinate for the location of the origin of the sphere. In another example, the surface model 104 can be a Bézier surface or Bézier surface patch. In this case, the surface model 104 can be represented by $p(u, v)$, a parametric representation of a location or coordinate in 3-D space. A Bézier surface patch can be represented by the following equation:

$$p(u, v) = \sum_{i=0}^{n} \sum_{j=0}^{m} b_{ij} B_i^n(u) B_j^m(v), \qquad 0 \le u, v \le 1 . \quad (1)$$

Here, $p(u, v)$ is a parametric representation of a location or coordinate in 3-D space, using two parameters. Given the parameters $u$ and $v$ where $(u, v)$ are in the unit square, $p(u, v)$ is an (x,y,z) coordinate in 3-D space. For a Bézier surface model, $B_i^n(u)$ and $B_j^m(v)$ are Bernstein polynomials in the form of

$$B_i^n(u) = \binom{n}{i} u^i (1 - u)^{n-i}, 0 \le u \le 1$$

using binomial coefficients:

$$\binom{n}{i} = \frac{n!}{i!\,(n-i)!}.$$

The shape of the Bézier surface patch is determined by model parameters $b_{ij}$, which are known as "control points". The control points are indexed by integers $i$ and $j$, where $i$ is an index from 0 to $n$ along the $u$ dimension and $j$ is an index from 0 to $m$ along the $v$ dimension. For example, if $m = 3$ and $n = 3$, then there are a total of 16 control points. The control points $b_{ij}$ are included in the model parameters 103.

For an organized point cloud, as described later, the predetermined organizational information 117 specifies how the points are organized, and can be input to the surface model fitting process 102. This organizational information 117 can be a specification of a mapping between each input point $p_i$ 101 and its location in an organizational matrix, grid, vector, or address in the memory. In some cases, the organizational information 117 can be inferred based upon the index, or address or order in the memory of each input point $p_i$ 101.

The surface model fitting process 102 can select the model parameters 103 to minimize a distortion. The distortion may be represented by the total or average distortion between each input point $p_i$ and each corresponding point $f_{mj}$ 106 on the surface model 104. In that case, the surface model 104 serves as a prediction of the set or subset of input points $p_i$ 101. The surface model fitting process 102 can also minimize reconstruction error. The reconstruction error is the total or average error between each input point $p_i$ and corresponding reconstructed point. In this case, the reconstructed point is identical to the reconstructed point in the decoding process, which will be described later.

Once the model parameters 103 have been computed, the surface model 104 for a set or subset of points is generated using those model parameters. Alternatively, the surface model 104 may be generated during the surface model fitting process 102 before computing the model parameters 103. In that case, the surface model 104 is already available and does not have to be regenerated.

The surface model 104 can be a continuous model $f$ 105 or a discrete model 106. The continuous model uses continuous values for $(u,v)$ in a unit square, resulting in a surface model $f(x,y,z) \triangleq (f^x, f^y, f^z)$, where $(f^x, f^y, f^z)$ represents the location of the surface model 104 in Cartesian space. For the discrete model, the parametric representation $p(u, v)$ of the location of the surface model 104 in 3-D space uses discrete parameters $(u_i, v_i)$ (note: $i$ is used as a general indexing term here and is a different index than the $i$ used in the Bézier surface patch equation described earlier.) In the discrete model, the surface model 104 is represented by a set of points $fm_j \triangleq \{fm^x_j, fm^y_j, fm^z_j\}$, $j = \{1, 2, \ldots, M\}$ 106, where each corresponding point $fm_j$ 106 represents a discrete point on a continuous surface model $f$. The intent of this part of the encoding process is to generate a set of $M$ surface model points that are a good representation of the set or subset of $N$ input points.

Once the surface model 104 has been obtained, the encoder 100 performs a residual computing process 107 to compute a set of residuals $r_i \triangleq \{r^x_i, r^y_i, r^z_i\}$, $i = \{1, 2, \ldots, N\}$ 108 corresponding to each input point $p_i$ 101. Each residual $r_i$ can be used as a prediction error, since the surface model can be considered as being a prediction of the input points. In some cases, the prediction error can be computed based on the residual; for example, if the residual $r_i$ is represented by a triplet of differences between each coordinate, which in this case would be $r_i = \{x_i - f^x_i, y_i - f^y_i, z_i - f^z_i\}$, $i = \{1, 2, \ldots, N\}$, then the prediction error can be computed using a squared-error distortion by summing the squares of each component of the residual.

In order to compute a residual $r_i$ 108, each input point $p_i$ 101 must have a corresponding point on the surface model $fm_j$ 106. The $N$ input points $p_i$ 101 and the $M$ surface model points $fm_j$ 106 are input to a process 109 that computes corresponding points $f_i$ 110 on the surface model 104. In another embodiment, the points of the continuous surface $f$ 105 may be used in the correspondence computation process 109. The process 109 outputs a set of $N$ corresponding surface model points $f_i \triangleq \{f^x_i, f^y_i, f^z_i\}$, $i = \{1, 2, \ldots, N\}$ 110, in which for a given $i$ in $\{1, 2, \ldots, N\}$, $f_i$ 110 denotes the point on the surface model 104 that corresponds to the input points $p_i$ 101.

Once the corresponding point $f_i$ 110 on the surface model 104 has been computed, the residuals $r_i$ 108 between the corresponding points $f_i$ 110 and the input points $p_i$ 101 is computed in the residual computing process 107, as described earlier.

The residuals $r_i$, $i = \{1, 2, \ldots, N\}$ 108 can be input to a transform process 111 to produce a set of transform coefficients 112. For example, the transform process 111 can apply a Discrete Cosine Transform (DCT) or other spatial domain to frequency domain transform to the residuals $r_i$ 108, to output a set of transform coefficients 112. In some cases, the transform process 111 may be a pass-through transform process, in which no operations alter the data, making the transform coefficients 112 identical to the residuals $r_i$ 108.

After the transform process 111, the transform coefficients 112 are input to a quantization process 113. The quantization process quantizes the transform coefficients 112 and outputs a set of quantized transform coefficients 114. The purpose of the quantization process 113 is to represent a set of input data for which each element of the data can have a value from a space that contains a large number of different values, by a set of output data for which each element of the data has a value from a space that contains fewer different values. For example, the quantization process 113 may quantize floating-point input data to integer output data. Lossless compression can be achieved if the quantization process 113 is reversible. This indicates that each possible output element from the quantization process 113 can be mapped back to the corresponding unquantized input element.

Successively, the quantized transform coefficients 114 are input to an entropy coder 115. The entropy coder 115 outputs a binary representation of the transform coefficients 115 to an output bit-stream 116. The output bit-stream 116 can be subsequently transmitted or stored in the memory or in a computer file. The model parameters 103 are also input to the entropy coder 115 for output to a bit-stream 116.

In another embodiment, the entropy coder 115 may include a fixed-length coder.

## Process to Compute Corresponding Points on a Surface Model

Figs. 2 and 3 show block diagrams of corresponding point computing processes 200 and 300. There are two types of corresponding point computing processes. The corresponding point computing process 200 is applied to organized point clouds, and the corresponding point computing process 300 is applied to unorganized point clouds, wherein the process 300 applied to unorganized point clouds is not part of the claimed invention.

The purpose of the process to compute corresponding points on a surface model 109 is to determine, for each input point $p_i$ 101, a corresponding point $f_i$ 110 on the surface model 104, so that later a residual $r_i$ 108 can be computed between each input point $p_i$ 101 and each corresponding point $f_i$ 110 on the surface model 104. This process for computing corresponding points on the surface model 104 in a process 109 can operate on the organized or unorganized point clouds. The processes will be described in detail after the explanation of the organized and unorganized point clouds below.

In an organized point cloud, each point $p_i$ 101 is associated with a position or address in a memory or in a matrix or vector containing one or more elements. For example, a 3x4 matrix contains 12 elements. Each point $p_i$ 101 in the point cloud can be associated with, or assigned to, an element or position in the matrix. This association creates an organization among the points that can be independent of the actual coordinates of the point $p_i$ 101 in 3-D space. Operations can then be applied to points based upon their organization in the matrix or memory, for example, points can be operated upon based upon their adjacency in the organizational matrix or grid. If the number of points $p_i$, $i = \{1, 2, ..., N\}$ 101 in the point cloud is less than the total number of memory addresses or matrix elements, then some of the memory addresses or matrix elements will not have input points $p_i$ 101 associated with them. These elements can be called "null points", empty spaces, or holes in the organizational grid.

In an unorganized point cloud, there is no organization matrix or grid as described above associated with the input points $p_i$ 101. The location of each point in 3-D space is known, but there is no relation among the points defined by an association with element locations in a matrix or grid or with address locations in a memory.

## Computing Corresponding Points for an Organized Point Cloud

Fig. 2 shows a block diagram of the corresponding point computing process 200. Given a set of $N$ input points $p_i$, $i = \{1, 2, ..., N\}$ 101, the input points $p_i$ are arranged in a memory, or in a matrix according to a predetermined organization or mapping.

In the encoding process 100, the predetermined organization or mapping can be represented by organizational information 117 as described earlier. The organizational information 117 can be a specified mapping or can be inferred based upon the order in which each input point $p_i$ 101 is input or stored in the memory. The $N$ input points $p_i$ 101 are arranged and stored 201 into the memory or in the matrix or vector having $M$ elements, locations, or addresses. If $M \geq N$, then "null point" placeholders are stored 202 into the memory, matrix, or vector locations. The null point place holders are not associated with any input points $p_i$ 101. In this case, the arranged input points $p_i$ 101 and null point placeholders are stored combined 210 in $M$ locations comprising $N$ input points $p_i$ 101 and $M$ - $N$ null point placeholders.

In the organized point cloud, each input point $p_i$ 101 is associated with a position or address in a memory or in a matrix or vector containing one or more elements as indicated in step S1. Each input point $p_i$ 101 in the organized point cloud is associated with an element assigned to a predetermined position in the matrix. In this case, an association is made between input points $p_i$ 101 and elements in the matrix. The association may be performed independently from the actual coordinates of the input point $p_i$ 101 in 3-D space. In step S2, arranging operations can be applied to the elements in the matrix based upon the association. In step S2, the elements in the matrix can be arranged to $M$ memory locations based upon their adjacency in the matrix.

If the number of the input points $p_i$, $i = \{1, 2, ..., N\}$ 101 in the point cloud is less than the total number of $M$ memory addresses or matrix elements, then some of the memory addresses or matrix elements will not have input points $p_i$ 101. These elements having no input points $p_i$ can be called "null points," empty spaces, or holes in the organizational matrix. After the steps S1 and S2 are performed, the matrix elements are stored into the M memory addresses or the matrix elements in the memory. For example, a matrix having 12 elements stored in the memory is indicated in Fig. 2. Note that the null points are indicates by "Ø." That is, if $M \geq N$, then "null point" placeholders are stored 202 into the memory, matrix, or vector locations that are not associated with any input points $p_i$ 101. In this case, the arranged input points $p_i$ 101 and null point placeholders are stored combined 210 in $M$ locations comprising $N$ input points $p_i$ 101 and $M - N$ null point placeholders.

Once the $N$ input points $p_i$ 101 are organized into a memory in step S4, matrix or vector having $M$ addresses or elements, surface model points 104, for example, discrete surface model points $fm_j$, $j = \{1, 2, ..., M\}$ 106 are generated in a process 203 using the surface model fitting process 102 in step S4.

In step S5, the surface model points $fm_j$ are arranged 204 into memory containing the same number and arrangement of addresses or elements as contained in the combined 210 locations, resulting in an ordered or organized arrangement of surface model points 211.

In some cases, the surface model points may be generated during the fitting process 102.

Because the process to compute corresponding points on the surface model in the process 109 outputs $N$ corresponding surface model points $f_i$, $i = \{1, 2, ..., N\}$ 110, the last step (Step 6) of the process for computing corresponding points between the model and the point locations for organized point clouds 200 is a method of selecting 205 $N$ points from the $M$ surface model points $fm_j$, $j = \{1, 2, ..., M\}$ 106. This selection can be achieved by inspecting the contents of the combined 210 locations in order, for example, from the first element to the last element. The position in this order can be indexed by $j$, and an index that keeps track of the non-null points can be denoted as $i$. If the first element, i.e. $j=1$ of combined 210 locations contains a non-null point, this non-null point will be $p_1$, so the corresponding point $f_1$ is set equal to surface model point $fm_1$ and $i$ is incremented. If this first element is null, then there is no corresponding point for this location, so no assignment is made. Next, $j$ is incremented and these steps are repeated for the next element in the combined 210 locations. The end result is the output of $N$ corresponding points $f_i$, $i = \{1, 2, ..., N\}$ 110 which are selected or mapped 212 from the elements of surface model points $fm_j$, $j = \{1, 2, ..., M\}$ whose locations correspond to non-null entries in the memory storing the combined 210 locations.

As discussed above, in the encoding process, the point cloud is an organized point cloud. In another case, which is not part of the claimed invention, the point cloud can be an unorganized point cloud.

## Computing Corresponding Points for an Unorganized Point Cloud

Fig. 3 shows a block diagram of a corresponding point computing process 300. The process for computing corresponding points on a surface model for unorganized point clouds 300 is shown in Fig. 3. Given a set of $N$ input points $p_i$, $i = \{1, 2, ..., N\}$ 101, the process 300 operates on unorganized point clouds, so the input points $p_i$, $i = \{1, 2, ..., N\}$ 101 are not required to be arranged in the memory, or in a matrix according to a predetermined organization or mapping.

Earlier, it was described that the surface model can be represented by $p(u, v)$, a parametric representation of a location or coordinate in 3-D space. For an unorganized point cloud and optionally for an organized point cloud, the surface model fitting process 102 can compute the parameters $(u, v)$ used to generate a location on the surface model patch that corresponds to a given input point. Thus, for each of the input points $p_i$, $i = \{1, 2, ..., N\}$ 101 there is a pair of parameters $(u_i, v_i)$ 301. A set of parameter pairs $(u_i, v_i)$ 301 can additionally be signaled as model parameters 103. The choice of each parameter pair $(u_i, v_i)$ 301 to be associated with each input point $p_i$ 101 can be computed during the surface model fitting process 102, for example, by minimizing the difference or distortion between each input point $p_i$ 101 and the location on the surface patch $p(u_i, v_i)$.

Given the input points $p_i$ 101 and computed parameters $(u_i, v_i)$ 301, the corresponding points (110) on the surface model $fm_i$, $i = \{1, 2, ... , N\}$ 311 are computed 303 by setting the corresponding points on the surface model $fm_i$ 311 to the locations on the surface patch $p(u_i, v_i)$ for the given $(u_i, v_i)$ 301 parameter pairs.

The $N$ input points $p_i$, $i = \{1, 2, ..., N\}$ 101 are arranged 310 in order with the surface model points $fm_i$, $i = \{1, 2, ... , N\}$ 311, whose order matches that of an ordered list 320 of the parameter pairs $(u_i, v_i)$ 301. Since the number of input points 101 and the number of surface model *points* $fm_i$ are both $N$, there is a one-to-one correspondence between the input points $p_i$ and the model points $fm_i$, so the corresponding points $f_i$, $i = \{1, 2, ..., N\}$ 110 of the surface model 104 are set in a process 305 with a one-to-one mapping 312 to the surface model points $fm_i$, $i = \{1, 2, ..., N\}$ 311.

**Process to Compute the Residual Between Point Locations and Corresponding Points of the Surface Model**

A process to compute the residual between point locations of an organized point cloud and corresponding points of the surface model 104 is shown in Fig. 4. Given the set of combined 210 locations, which contain the input points $p_i$, $i = \{1, 2, ..., N\}$ 101 and null point placeholders as output from the arranging 201 and storing 202 processes of Fig. 2, and given the corresponding points $f_i$, $i = \{1, 2, ..., N\}$ 110 of the surface model computed in the process 109 during the encoding process 100 of Fig. 1, the residuals $r_i$, $i = \{1, 2, ..., N\}$ 108 are computed 440 as the difference between each input point $p_i$ 101 and the corresponding point $f_i$ of the surface model 104. This difference can be computed for each coordinate of the point, in which $r_i = \{x_i - f^x_i, y_i - f^y_i, z_i - f^z_i\}$, $i = \{1, 2, ... , N\}$. When processing an unorganized point cloud, there are no null point placeholders in the arranged points 210, so the list of residuals has a one-to-one correspondence to the input points 101 and corresponding points 110 on the surface model 104. When processing an organized point cloud, there is still a one-to-one correspondence in computing the residuals, but the residuals are arranged in the same way as the arranged points 210. In Fig. 4, the list of corresponding points 430 are arranged in a larger memory so that locations occupied by null points in the list of arranged points 210, have no entries corresponding to the null point locations in the list of arranged points 210. By subtracting this list of corresponding points 430 from the list of arranged points 210, the memory storing the residuals 441 can contain null point entries in the same locations as in the memory storing the arranged points 210. Thus, for organized point clouds, the residuals 108 output from the residual computation process 107 also include information, either explicitly or implicitly based on storage location, about the location of null point entries. For an organized point cloud, there are no null point entries, so the output residuals 108 contain a list of differences as computed by the residual computation process 107.

In an embodiment, the residual data represent distances between the corresponding points and the input points.

Further, in some cases, the input points $p_i$ 101 may include attributes. In this case, the corresponding points may include attributes. For example, the attributes may include color information.

Further, some embodiments disclose an encoder system for encoding a point cloud of representing a scene, wherein each point of the point cloud is a location in a three dimensional (3D) space, the encoder system including a processor in communication with a memory; an encoder module stored in the memory, the encoder module being configured to encode a point cloud of representing a scene by performing steps, wherein the steps comprise: fitting a parameterized surface onto the point cloud formed by input points; generating model parameters from the parameterized surface; computing corresponding points on the parameterized surface, wherein the corresponding points correspond to the input points; computing residual data based on the corresponding points and the input points of the point cloud; compressing the model parameters and residual data to yield coded model parameters and coded residual data, respectively; and producing a bit-stream from coded the model parameters of the parameterized surface and the coded residual data.

**Decoding Process**

Some embodiments of the invention are based on recognition that encoded point cloud data can be effectively decoded by receiving a bit-stream that includes model parameters of a parameterized surface and residual data computed from an original point cloud. Some embodiments disclose a method for decoding a point cloud representing a scene using a decoder including a processor in communication with a memory, including steps of receiving model parameters for a parameterized surface; receiving residual data; determining the parameterized surface using the model parameters; computing corresponding points from the parameterized surface according to a predetermined arrangement; and computing reconstructed input points by combining the residual data and the corresponding points.

Fig. 5 is a diagram of the decoder or decoding process for an embodiment of the invention. The input to the decoder is a bit-stream 116. The bit-stream 116 is decoded by an entropy decoder 515, which produces a set of model parameters 103 and quantized transform coefficients 114. The quantized transform coefficients are inverse quantized 513 to produce inverse quantized transform coefficients 512. The inverse quantized transform coefficients 512 are input to an inverse transform 511, which produces a set of reconstructed residuals $\hat{r}_i$, $i = \{1, 2, ... , N\}$ 508, which can be, for example, $\hat{r}_i \triangleq \{\hat{r}^x_i, \hat{r}^y_i, \hat{r}^z_i\}$ when using a Cartesian coordinate system.

The model parameters 103 decoded from the entropy decoder 515 are input to a surface model generation process 515, which generates a surface model 104 in the same manner as in the surface model fitting process 102 of the encoding process 100, but without the fitting part of that process because the model parameters are provided by decoding them from the bit-stream 116. The surface model 104 can be a continuous $f(x,y,z) \triangleq (f^x, f^y, f^z)$ 105 or discrete $fm_j \triangleq \{fm^x_j, fm^y_j, fm^z_j\}$, $j = \{1, 2, ... , M\}$ 106. If the surface model 104 is a Bézier surface patch, then the model parameters 103 include control points $b_{ij}$. The surface model 104 is input to a process to compute corresponding points on a surface model in the process 109, which computes corresponding points $f_i$, $i = \{1, 2, ..., N\}$ 110 of the surface model 104 according to a predetermined arrangement. For example, the predetermined arrangement may be performed by an adjacency of parameters in the models. In this case, the corresponding points from the parameterized surface can be computed according to an arrangement, and the model parameters include a specification of the arrangement.

Given the reconstructed residuals $\hat{r}_i$ and corresponding points $f_i$ on the surface model 104 as input, a combiner 507 computes the reconstructed point cloud or reconstructed input points $\hat{p}_i$, $i = \{1, 2, ..., N\}$ 501. The process performed in the combiner 507 can be, for example, addition, in which $\hat{p}_i = \{\hat{r}^x_i + f^x_i, \hat{r}^y_i + f^y_i, \hat{r}^z_i + f^z_i\}$, $i = \{1, 2, ..., N\}$.

In another example, the process by the combiner 507 can be performed by adding the residual data and the corresponding points.

Analogous to input points $p_i$ 101 in the encoding process 100, the reconstructed point cloud $\hat{p}_i$ 501 is organized.

For the non-claimed unorganized case, the model parameters entropy decoded 515 from the bit-stream 116 can include a list 320 of $(u_i, v_i)$ 301 parameter pairs, which are used as parameters for generating a surface model 104, such as a surface patch $p(u_i, v_i)$ of a Bézier surface model 104. The corresponding points on the surface model 104 are computed 109 similarly to how they are computed in the encoder, yielding a set of $N$ corresponding points 110 on the surface model 104.

For the organized case, the reconstructed residuals $\hat{r}_i$ 508 include the locations of the null points, i.e. they are arranged into memory in the same way as the residuals 441 generated inside the encoding process 100. The process to compute 109 corresponding points 110 on the surface model 104 in the decoding process 500 can operate in the same way as is done inside the encoding process 100.

When operating on reconstructed residuals 508 having null points, the combiner 507 copies input null points to its output.

In another embodiment, the combiner can copy the corresponding point 110 on the surface model 104 to its output, which in that case would replace all the null point placeholders in the reconstructed point cloud 501 with corresponding points 110 from the surface model 104. This embodiment can be used to replace "holes" or points missing from a point cloud with points from the surface model 104.

## Hierarchical Partitioning Process

When more than one surface model 104 is needed, a hierarchical partitioning process can be used to break the point cloud into smaller point clouds, each having their own model.

## Hierarchical Partitioning Process for Encoding

For organized point clouds, the surface model 104 can be a surface patch $p(u_i, v_i)$, where a pair of parameters $(u_i, v_i)$ 301 are used to compute a point location in 3-D space for the surface model 104. For a continuous surface model 104, the parameters $(u, v)$ of a surface patch $p(u, v)$ span a unit square, i.e. $0 \leq u, v \leq 1$. For a discrete surface model, the parameter space $(u, v)$ can be discretized as an $J \times K$ grid of parameter values $(u_j, v_k)$, $j = \{1, 2, ..., J\}$, $k = \{1, 2, ..., K\}$. In this case, the surface patch $p(u_j, v_k)$ comprises $M \times N$ points in 3-D space.

Fig. 6 is a diagram of a hierarchical partitioning process according to the embodiments of the invention. The initial parameter space, which in this case is a 2-D grid $(u_j, v_k)$, $j = \{1, 2, ..., J\}$, $k = \{1, 2, ..., K\}$ 601 can be represented by an initial rectangle *602* having width $w = J$ and height $h = K$.

In some cases, an adjacency may be defined by neighboring positions on the 2-D grid. Further, the neighboring positions can be in the horizontal, vertical and diagonal directions.

Given the initial parameter space $(u_j, v_k)$ 601 represented by a rectangle 602 having size $w \times h$, a surface model patch $p(u_i, v_i)$ 603 is generated by the surface model fitting process 102. The encoding process 100 and decoding process 500 represent a discrete surface model as $fm_l$, $l = \{1, 2, ..., L\}$ 106, so a patch to surface model mapping 604 maps $p(u_j, v_k)$ $j = \{1, 2, ..., J\}$, $k = \{1, 2, ..., K\}$ to $fm_l$, $l = \{1, 2, ..., L\}$. Therefore, $L = J \times K$.

A fitting error $e$ 603 between the input points associated with the current rectangle representation, which initially can represent all the input points, and the discrete surface model 104 106 is computed 605. The fitting error e can be measured as, for example, the total or mean-square error between each component (e.g. the x component, y component, and z component) of the input point and its corresponding surface model point. In another embodiment, the fitting error $e$ can be measured as the total or average deviation among surface normal of a surface model 104 and of a previously-computed surface model 104.

If the fitting error $e$ 606 is less than a predetermined fitting error threshold $T$ 607, then the hierarchical partitioning process 600 is considered as being successful, so a partition flag 610 indicating that the rectangle will no longer be split is output 608, and the discrete surface model $fm_l$ 106 for the points associated with the current rectangle along with the model parameters 103 are also output 608 and this process ends. For the case when the surface model 104 is a Bézier surface, the model parameters 103 can include the control points $b_{ij}$ shown in equation (1). They can also include the width w and height $h$ of the current rectangle representation.

If the fitting error e 606 is not less than a predetermined fitting error threshold $T$ 607, then the current surface model 104 is considered as not being a good fit to the input points associated with the current rectangle. In this case, the rectangle is partitioned into two or more rectangles by a rectangle partitioning process 609, and a partition flag 610 is output 611 to indicate that the rectangle will be partitioned.

The rectangle partitioning process 609 takes the current rectangle representation of the parameter space, and divides the rectangle which has width $w$ and height $h$ into partitioned rectangles 612 comprising two or more rectangles. For example, a binary partitioning can divide the rectangle into two rectangles, each having width $w/2$ and height $h$. In another example, after dividing, each rectangle can have width $w$ and height $h/2$. If $w/2$ or $h/2$ are not integers, then rounding can be done, e.g. one rectangle can have width floor($w/2$) and the other can have width floor($w/2$)+1, where floor() rounds down to the nearest integer. For a binary partitioning, whether to divide along the width or along the height can be either decided by a predetermined process, or the decision as to which dimension to divide can be explicitly signaled in the bit-stream as a flag. In the former case, an example of such a predetermined process is to divide the rectangle across its longer dimension. For example, if $w$ = 10 and $h$ = 4, then the rectangle can be divided across the width, so partitioned rectangles 612 will each have width $w$ = 5 and height $h$ = 4.

In another embodiment, the rectangle partitioning process 609 can divide a rectangle into more than two rectangles, for example, four rectangles each representing one quadrant of the rectangle.

In another embodiment, the rectangle partitioning process 609 can partition the rectangle based upon the density of the input points 101 associated with the rectangle. For example, if the input points for that rectangle represent two distinct objects in 3-D space, then the rectangle partitioning process 609 can divide the rectangle into two parts, each containing one object. To determine where to best divide the rectangle, for example, the density of input points for the rectangle can be measured, and the partitioning can be done along a line that maximizes the density in each partitioned rectangle; or, in another example, the partitioning can be done along a line that minimizes the sum of distances between that line and each point in the partitioned rectangles, e.g. by fitting a line using a least-square approximation. Parameters indicating the location of the partitioning can be coded signaled in the bit-stream as model parameters.

Once the partitioned rectangles 612 are obtained, the hierarchical partitioning process 600 is repeated for each of the partitioned rectangles 612 by inputting them to the surface model fitting process 102 in the hierarchical partitioning process 600.

In addition to terminating the partitioning process 609 for a rectangle or partitioned rectangle when its fitting error 606 is less than a threshold 607, the partitioning process 609 for a rectangle can be terminated when the width $w$ or height $h$, or the area, i.e. product of the width and height, are less than a predetermined value. For example, if a Bézier surface patch having 16 control points is used as a surface model 104, and if the area of a rectangle 10, then it may be more efficient to directly signal the 10 input points 101 associated with the rectangle instead of fitting it with a surface model 104 that requires the signaling of 16 control points.

In another embodiment, the number of control points to use for the surface model 104 can depend upon the width and height of a rectangle. For example, if the area of a rectangle is less than 16, then a surface model 104 with fewer control points can be used. A value or index to a look-up table can be signaled in the bit-stream to indicate how many control points are used in the surface model 104 for a given rectangle.

In another embodiment, the rank, i.e. the number of linearly independent rows or columns for a matrix of input points 101 or a decomposition of the matrix of input points associated with a rectangle can be measured, and the number of control points to use for generating the surface model 104 can be set to a value less than or equal to the rank.

When the hierarchical partitioning process 600 is complete, a sequence of partition flags 610 will have been output. If the partitioning process is predetermined, in that it can be entirely specified by the partitioning flags and the width and height of the initial rectangle representation, for example, by knowing that a binary division always occurs across the longer dimension, then sufficient information will be available to the decoder for recovering the locations of all partitioned rectangles. Thus, the width and height of the initial rectangle representation 602, the sequence of partition flags 610, and the model parameters 103 such as control points for each rectangle can be used by the decoder to generate 515 surface models 104 for each rectangle.

**Processing Partitioned Rectangles in the Decoder**

In one embodiment, the decoder can decode from the bit-stream the width and height of an initial rectangle representation 602, i.e. a 2-D organizational grid. The decoder next decodes from the bit-stream a partition flag 610, where a partition flag of 1 or true indicates that the rectangle is to be partitioned, for example, into two rectangles (a first and second rectangle), and, for example, wherein that split can occur across the longer dimension of the rectangle. If the rectangle is split, then the next partition flag 610 decoded from the bit-stream is the partition flag 610 for the first rectangle.

If that partition flag is 0 or false, then the first rectangle will not subsequently be split, and a payload flag can be decoded from the bit-stream to indicate what kind of data will be decoded for the first rectangle. If the payload flag is 1 or true, then control points and data representing the residuals 108, such as quantized transform coefficients 114 for the first rectangle are entropy decoded from the bit-stream. After decoding the data representing the residuals, model parameters 103, such as control points for the surface model 104 for this rectangle, can be entropy decoded from the bit-stream. If the payload flag is 0 or false, then no residual is available for the first rectangle, which can happen, for example, if no surface model 104 was used and the encoder directly signaled the input points 101 into the bit-stream. In this case, the decoder will next entropy decode from the bit-stream input points, quantized input points, or quantized transform coefficients of transformed input points for the first rectangle. In another embodiment, no payload flag is used. In that case, a surface model 104 is always used, so data representing residuals will be decoded from the bit-stream.

If that partition flag is 1 or true, then the first rectangle will be further partitioned.

A data structure representing a hierarchy or tree can be traversed *breadth-first* or *depth-first.* For the breadth-first case, the next data that is decoded from the bit-stream is the partition flag for the second rectangle. For the depth-first case, the next data that is decoded from the bit-stream is the partition flag for the current rectangle, which in this case indicates whether the first rectangle will be further split.

This processing of partitioned rectangles in the decoder is performed on each rectangle until all rectangles have been processed.

As is the case during the encoding process, additional criteria can be used to decide whether a block is split or not split. For example, if the dimensions (width and/or height, or area) of a rectangle are below predetermined thresholds, then the partitioning process for that rectangle can be terminated without having to decode a split flag from the bit-stream. The dimensions of each rectangle can be inferred during the splitting process from the height and width of the initial rectangle representation 602.

## Additional Embodiments

In another embodiment, after a selected set of rectangles or partitioned rectangles 612 have been processed and the reconstructed point cloud 501 is output by the decoding process 600, additional rectangles can be processed to generate additional points for the reconstructed point cloud 501, for example, in a scalable decoding system.

In another embodiment, the fitting error 606 is computed as the difference between the discrete surface model 106 and the reconstructed point cloud 501 that would result if that surface model were used by the encoding process 100 and decoding process 600.

In another embodiment, instead of computing a difference-based fitting error 606, e.g. the mean-squared error between the input points 101 and the discrete surface model 106, an error metric can be the sum of the mean-squared error plus a scaled number of bits occupied in the bit-stream for representing all data associated with the rectangle being processed.

In another embodiment, the partitioning of a rectangle can occur across the shorter dimension of the rectangle.

In another embodiment, all the partition flags 610 are decoded from the bit-stream before any data associated with each rectangle, such as control points, other model parameters 103, and data associated with the residuals 108. This embodiment allows the full partitioning hierarchy to be known by the decoder before the remaining data is decoded from the bit-stream.

In another embodiment, some or all of the partition flags are decoded from the bit-stream before the payload flags and associated data are decoded, and then payload flags and data from a selected subset of rectangles can be decoded from the bit-stream. The desired rectangles can be selected by specifying a region of interest on the initial rectangle representation 602, for example, by drawing an outline of a representation of the organizational grid on a computer display, and then only the data in the bit-stream associated with the rectangles contained or partially contained in the region of interest can be decoded from the bit-stream.

In another embodiment, a region of interest is selected from 3-D space, e.g. a 3-D bounding box encompasses the input points 101 of interest, then for the point locations in the 3-D region of interest, their corresponding locations in the 2-D rectangle representation 602 are identified, i.e. looked-up or inverse mapped, and a 2-D bounding box is computed over the 2-D rectangle representation that contains all of these selected corresponding locations. This bounding box comprises a new initial sub-rectangle that is populated by the selected corresponding input points 101. For any locations inside this new sub-rectangle that do not have corresponding 3-D point locations inside the 3-D bounding box, they are populated with null points, wherein a null point is a value indicating that there is no corresponding point in 3-D space, e.g. a "hole".

In another embodiment, the rectangle partitioning process 609 partitions a rectangle so that the number of input points 101 associated with each partitioned rectangle 612 are equal or approximately equal.

In another embodiment, each input point 101 has an associated attribute. An attribute is additional data including but not limited to color values, reflectance, or temperature.

In another embodiment, the control points for a surface model patch are quantized and optionally transformed during the encoding process 100, and are inverse quantized and optionally inverse transformed during the decoding process 500.

In another example, for an unorganized point cloud, in which the input points are not arranged in a memory along with null point placeholders in the memory locations that do not contain input points, the positions of the corresponding input point location on the manifold associated with the parameterized model is signaled in the bit-stream. For example, with Bézier surfaces or Bézier patches, a unit square, represented by parameters $u$ and $v$, where both $u$ and $v$ are between 0.0 and 1.0 inclusive, is mapped to (x,y,z) coordinates in 3-D space. For an organized point cloud, which is the case in the preferred embodiment, the unit square can be sampled with a uniform grid so that each (x,y,z) point in 3-D corresponds to a sample position on the $(u,v)$ unit square plane, and sample positions on the $(u,v)$ unit square plane that do not have a corresponding point in 3-D space can be populated by a null point. The sample positions in the $(u,v)$ unit square plane can be populated by, i.e. associated with, input points 101, using a predetermined order. For example, a sequence of input points 101 can populate the 2-D sample positions in a raster-scan order, where each row in the 2-D sample position is filled from the first to the last element in the row, and then the next input points go into the next row.

In another embodiment, the parameter space 601 is a 2-D grid or manifold with uniform sampling.

In another embodiment, the parameter space 601 is a 2-D grid or manifold with non-uniform sampling. For example, the center of the grid can have a higher density of points than the edges. As a further example, a uniform grid can be sampled at every integer position, and then a centered square having one half the width and height of the whole parameter space can be additionally sampled at every half-integer or quarter-integer position.

In another embodiment, a 2D 111 transform is applied to the components of the residual data 108 according to their corresponding locations on the 2D organizational grid 117.

In another embodiment, the residual data 108 corresponding to partitioned rectangles 112 are signaled to the bit-stream 116 in an order based upon the dimensions of the partitioned rectangles 612, for example, from largest to smallest area, or in another example, from smallest to largest area, where area is the area or width times height of a partitioned rectangle 612.

In another embodiment, the reconstructed input points comprise a three-dimensional map (3D map). A vehicle can determine its position in 3D space by capturing a point cloud from sensors located on the vehicle, and then comparing the captured point cloud with the reconstructed input points or reconstructed point cloud. By registering, i.e. aligning, points on the captured point cloud with reconstructed input points, the position of objects or points in the captured point cloud can be associated with objects or points in the reconstructed point cloud. Given that the position of objects captured by the vehicle's sensors is known relative to the position of the vehicle or vehicle's sensors, and given that after the registration process the positions of objects captured by the vehicle's sensors are known relative to the reconstructed point cloud, the position of the vehicle in the reconstructed point cloud can be inferred, and therefore, the position of the vehicle in the 3D map can be inferred and thus known.

**Effect of the Invention**

According to some embodiments of the invention, a point cloud can be effectively encoded and decoded, and the embodiments can be useful for compressing three dimensional representations of objects in the point cloud. Further, the methods of encoding and decoding according to some embodiments of the invention can generate a compressed representation that allows one to quickly or easily decode and reconstruct a coarse representation of the point cloud geometry without having to decode the entire file or bit-stream.

**Claims**

1. A method for encoding an organized point cloud (101) representing a scene using an encoder (100) including a processor in communication with a memory, wherein each point of the point cloud is a location in a three-dimensional (3D) space, the method comprising steps of:

fitting (102) a parameterized surface onto the point cloud (101) formed by N input points $p_i$ (101); wherein predetermined organizational information (117) is input to the fitting step, wherein the organizational information (117) is a specification of a mapping between each input point $p_i$ (101) and its location in an organizational matrix, vector, or address in the memory; wherein the N input points $p_i$ (101) are arranged and stored into the memory or in the matrix or vector having M elements, locations, or addresses; wherein the arranged input points $p_i$ (101) and null point placeholders are stored combined in M locations comprising N input points $p_i$ (101) and

M - N null point placeholders, where M is larger than N;
generating a set of M surface model points $fm_j$, wherein the M surface model points $fm_j$ are arranged and stored into M memory locations containing the same number and arrangement of addresses or elements as in said M locations comprising N input points $p_i$ (101) and M - N null point placeholders;
generating model parameters (103) from the parameterized surface;
wherein a surface model (104) of the parameterized surface is represented by the set of points

$$fm_j \triangleq \{fm^x_j, fm^y_j, fm^z_j\}, j = \{1, 2, ... , M\} \text{ (106)},$$ where each point $fm_j$ (106) represents a discrete point on a continuous surface model $$f(x,y,z) \triangleq (f^x, f^y, f^z),$$ where ($f^x$, $f^y$, $f^z$) represents the location of the surface model (104) in Cartesian space;
computing (109) corresponding points $f_i$ (110) $i = \{1, 2, ..., N\}$ having locations on the parameterized surface represented by the set of points $fm_j$ by selecting N points from the M surface model points $fm_j$, wherein each corresponding point $f_i$ (110) corresponds to each input point $p_i$ (101); wherein the N corresponding points $f_i$, $i = \{1, 2, ..., N\}$ are selected from the M surface model points $fm_j$, $j = \{1, 2, ... , M\}$ such that the selected points $f_i$ are the list of surface model points corresponding to locations in the input point memory that contain non-null points;
computing (107) residual data (108) based on the corresponding points $f_i$ (110) and the input points of the point cloud (101);
compressing the model parameters (103) and the residual data to yield coded model parameters and coded residual data (108); and
producing a bit-stream (116) from the coded model parameters (103) of the parameterized surface and the coded residual data (108);
wherein the step of compressing includes transform and quantization steps.

2. The method of claim 1, wherein the residual data (108) represent distances between the corresponding points (106) and the input points.

3. The method of claim 1, wherein the input points and the corresponding points (106) include attributes.

4. The method of claim 3, wherein the attributes include color information.

5. The method of claim 1, wherein the step of compressing includes entropy coding (115).

6. The method of claim 1, wherein the step of generating model parameters is performed during the step of fitting.

7. The method of claim 1, wherein the step of computing the residual data (108) is a difference between the components of the corresponding points (106) and the corresponding components of the input points of the point cloud (101).

8. The method of claim 1, further comprising steps of:

receiving the model parameters (103) for the parameterized surface;
receiving the residual data (108);
determining the parameterized surface using the model parameters (103);
computing the corresponding points from the parameterized surface according to a predetermined arrangement; and
computing reconstructed input points by combining the residual data (108) and the corresponding points.

9. The method of claim 8, wherein the corresponding points from the parameterized surface are computed according to an arrangement and the model parameters include a specification of the arrangement.

10. The method of claim 8, wherein the predetermined arrangement is determined by an adjacency in a predetermined arrangement.

11. The method of claim 8, wherein the step of combining is performed by adding the residual data (108) and the corresponding points.

12. The method of claim 8, wherein the reconstructed input points comprise a three-dimensional map, and a vehicle determines its position on the three-dimensional map by registering data acquired from the vehicle with data in the three-dimensional map.

13. The method of claim 12, wherein the data acquired from the vehicle is a point cloud (101), and the registering includes a comparing of the point cloud (101) acquired by the vehicle to the reconstructed input points comprising a three-dimensional map.

14. The method of claim 8, wherein a subset of model parameters and a subset of residual data are received and are used to reconstruct a subset of input points, and a subsequent subset of additional model parameters and subset of additional residual data are received and are used to refine the subset of reconstructed input points.

15. The method of claim 1, further comprising the steps of:

defining rectangles that encompass a two-dimensional grid;
associating each input point with an index on the two-dimensional grid;
fitting, for each of the rectangles, a parameterized surface onto the input points indexed in the rectangle;
measuring, for each of the rectangles, a fitting error between the parameterized surface and the input points indexed in the rectangle; and
hierarchically partitioning each of the rectangles into smaller rectangles if the fitting error is above a predetermined threshold.

16. An encoder system (100) for encoding an organized point cloud (101) representing a scene, wherein each point of the point cloud is a location in a three dimensional (3D) space, the encoder system (100) comprising:

a processor in communication with a memory;
an encoder module stored in the memory, the encoder module being configured to encode a point cloud (101) representing a scene by performing steps, wherein the steps comprise:

fitting (102) a parameterized surface onto the point cloud (101) formed by N input points $p_i$ (101); wherein predetermined organizational information (117) is input to the fitting step, wherein the organizational information (117) is a specification of a mapping between each input point $p_i$ (101) and its location in an organizational matrix, vector, or address in the memory; wherein the N input points $p_i$ (101) are arranged and stored into the memory or in the matrix or vector having M elements, locations, or addresses; wherein the arranged input points $p_i$ (101) and null point placeholders are stored combined in M locations comprising N input points $p_i$ (101) and M - N null point placeholders, where M is larger than N;
generating a set of M surface model points $fm_j$, wherein the M surface model points $fm_j$ are arranged and stored into M memory locations containing the same number and arrangement of addresses or elements as in said M locations comprising N input points $p_i$ (101) and M - N null point placeholders;
generating model parameters (103) from the parameterized surface;
wherein a surface model (104) of the parameterized surface is represented by the set of points

$$\boldsymbol{fm}_j \triangleq \{fm^x_j, fm^y_j, fm^z_j\}, j = \{1, 2, ..., M\}$$ (106), where each point $\boldsymbol{fm}_j$ (106) represents a discrete point on a continuous surface model $$f(x,y,z) \triangleq (f^x, f^y, f^z)$$, where $(f^x, f^y, f^z)$ represents the location of the surface model (104) in Cartesian space;
computing (109) the corresponding points $f_i$ (110) $i = \{1, 2, ..., N\}$ having locations on the parameterized surface represented by the set of points $\boldsymbol{fm}_j$ by selecting N points from the M surface model points $\boldsymbol{fm}_j$, wherein each corresponding point $f_i$ (110) corresponds to each input point $p_i$ (101); wherein the N corresponding points $f_i$, $i = \{1, 2, ..., N\}$ are selected from the M surface model points $\boldsymbol{fm}_j$, $j = \{1, 2, ... , M\}$ such that the selected points $f_i$ are the list of surface model points corresponding to locations in the input point memory that contain non-null points;
computing (107) residual data (108) based on the corresponding points $f_i$ (110) and the input points of the point cloud (101);
compressing the model parameters and residual data (108) to yield coded model parameters and coded residual data (108), respectively; and
producing a bit-stream (116) from coded the model parameters of the parameterized surface and the coded residual data (108);

wherein the step of compressing includes transform and quantization steps.

17. A non-transitory computer readable recording medium storing thereon a program for encoding an organized point cloud (101) representing a scene, wherein each point of the point cloud (101) is a location in a three dimensional (3D) space, when executed by a processor, the program causes the processor to perform steps of:

fitting (102) a parameterized surface onto the point cloud (101) formed by N input points $p_i$ (101) ; wherein predetermined organizational information (117) is input to the fitting step, wherein the organizational information (117) is a specification of a mapping between each input point $p_i$ (101) and its location in an organizational matrix, vector, or address in the memory; wherein the N input points $p_i$ (101) are arranged and stored into the memory or in the matrix or vector having M elements, locations, or addresses; wherein the arranged input points $p_i$ (101) and null point placeholders are stored combined in M locations comprising N input points $p_i$ (101) and M - N null point placeholders, where M is larger than N;

generating a set of M surface model points $fm_j$, wherein the M surface model points $fm_j$ are arranged and stored into M memory locations containing the same number and arrangement of addresses or elements as in said M locations comprising N input points $p_i$ (101) and M - N null point placeholders;

generating model parameters from the parameterized surface;

wherein a surface model (104) of the parameterized surface is represented by the set of points

$$fm_j \triangleq \{fm^x_j, fm^y_j, fm^z_j\}, j = \{1, 2, \dots, M\}\ (106),$$ where each point $fm_j$ (106) represents a discrete point on a continuous surface model $f(x,y,z) \triangleq (f^x, f^y, f^z)$, where $(f^x, f^y, f^z)$ represents the location of the surface model (104) in Cartesian space;

computing (109) the corresponding points $f_i$ (110) $i = \{1, 2, \dots, N\}$ having locations on the parameterized surface represented by the set of points $fm_j$ by selecting N points from the M surface model points $fm_j$, wherein each corresponding point $f_i$ (110) corresponds to each input point $p_i$(101); wherein the N corresponding points $f_i$, $i = \{1, 2, \dots, N\}$ are selected from the M surface model points $fm_j$, $j = \{1, 2, \dots, M\}$ such that the selected points $f_i$ are the list of surface model points corresponding to locations in the input point memory that contain non-null points;

computing (107) residual data (108) based on the corresponding points $f_i$ (110) and the input points of the point cloud (101);

compressing the model parameters and the residual data (108) to yield coded model parameters and coded residual data (108), respectively; and

producing a bit-stream (116) from the coded model parameters of the parameterized surface and the coded residual data (108);

wherein the step of compressing includes transform and quantization steps.

**Patentansprüche**

1. Verfahren zum Codieren einer organisierten Punktwolke (101), die eine Szene darstellt, unter Verwendung eines Codierers (100), der einen Prozessor in Kommunikation mit einem Speicher umfasst, wobei jeder Punkt der Punktwolke eine Position in einem dreidimensionalen (3D) Raum ist, das Verfahren Schritte umfassend:

Anpassen (102) einer parametrisierten Oberfläche an die durch N Eingabepunkte $p_i$ (101) gebildete Punktwolke (101); wobei vorherbestimmte organisatorische Information (117) in den Anpassungsschritt eingegeben wird, wobei die organisatorische Information (117) eine Spezifikation einer Zuordnung zwischen jedem Eingabepunkt $p_i$ (101) und seiner Position in einer organisatorischen Matrix, einem Vektor oder einer Adresse im Speicher ist; wobei die N Eingabepunkte $p_i$ (101) in dem Speicher oder in der Matrix oder dem Vektor mit M Elementen, Positionen oder Adressen angeordnet und gespeichert sind; wobei die angeordneten Eingabepunkte $p_i$ (101) und Nullpunktplatzhalter kombiniert an M Positionen gespeichert werden, die N Eingabepunkte $p_i$ (101) und M - N Nullpunktplatzhalter umfassen, wobei M größer als N ist;

Generieren einer Gruppe von M Oberflächenmodellpunkten $fm_j$, wobei die M Oberflächenmodellpunkte $fm_j$ in M Speicherplätzen angeordnet und gespeichert sind, welche die gleiche Anzahl und Anordnung von Adressen oder Elementen wie in den M Plätzen enthalten, die N Eingabepunkte $p_i$ (101) und M - N Nullpunktplatzhalter umfassen;

Generieren von Modellparametern (103) aus der parametrisierten Oberfläche;

wobei ein Oberflächenmodell (104) der parametrisierten Oberfläche durch die Gruppe von Punkten $fm_j \triangleq \{fm^x_j, fm^y_j, fm^z_j\}$, $j = \{1, 2, ..., M\}$ (106) dargestellt ist, wobei jeder Punkt $fm_j$ (106) einen diskreten Punkt auf einem kontinuierlichen Oberflächenmodell $f(x,y,z) \triangleq (f^x, f^y, f^z)$ darstellt, wobei $(f^x, f^y, f^z)$ die Position des Oberflächenmodells (104) im kartesischen Raum darstellt;

Berechnen (109) korrespondierender Punkte $f_i$ (110) $i = \{1, 2, ..., N\}$, die Positionen auf der parametrisierten Oberfläche haben, die durch die Gruppe von Punkten $fm_j$ durch Auswählen von N Punkten aus den M Oberflächenmodellpunkten $fm_j$, dargestellt sind, wobei jeder korrespondierende Punkt $f_i$ (110) mit jedem Eingabepunkt $p_i$ (101) korrespondiert; wobei die N korrespondierenden Punkte $f_i$, $i = \{1, 2, ..., N\}$ aus den M Oberflächenmodellpunkten $fm_j$, $J = \{1, 2, ..., M\}$ so ausgewählt werden, dass die ausgewählten Punkte $f_i$ die Liste von Oberflächenmodellpunkten sind, die mit Positionen im Eingabepunktespeicher korrespondieren, die Nicht-Nullpunkte enthalten;

Berechnen (107) von Restdaten (108) basierend auf den korrespondierenden Punkten $f_i$ (110) und den Eingabepunkten der Punktwolke (101);

Komprimieren der Modellparameter (103) und der Restdaten, um codierte Modellparameter und codierte Restdaten (108) zu erhalten; und

Erzeugen eines Bitstroms (116) aus den codierten Modellparametern (103) der parametrisierten Oberfläche und den codierten Restdaten (108);

wobei der Schritt des Komprimierens Transformations- und Quantisierungsschritte umfasst.

2. Verfahren nach Anspruch 1, wobei die Restdaten (108) Distanzen zwischen den korrespondierenden Punkten (106) und den Eingabepunkten darstellen.

3. Verfahren nach Anspruch 1, wobei die Eingabepunkte und die korrespondierenden Punkte (106) Attribute umfassen.

4. Verfahren nach Anspruch 3, wobei die Attribute Farbinformation umfassen.

5. Verfahren nach Anspruch 1, wobei der Schritt des Komprimierens Entropie-Codierung (115) umfasst.

6. Verfahren nach Anspruch 1, wobei der Schritt des Generierens von Modellparametern während des Schritts des Anpassens durchgeführt wird.

7. Verfahren nach Anspruch 1, wobei der Schritt des Berechnens der Restdaten (108) eine Differenz zwischen den Komponenten der korrespondierenden Punkte (106) und den korrespondierenden Komponenten der Eingabepunkte der Punktwolke (101) ist.

8. Verfahren nach Anspruch 1, ferner umfassend Schritte des:

Empfangens der Modellparameter (103) für die parametrisierte Oberfläche;

Empfangens der Restdaten (108);

Bestimmens der parametrisierten Oberfläche unter Verwendung der Modellparameter (103);

Berechnens der korrespondierenden Punkte aus der parametrisierten Oberfläche gemäß einer vorherbestimmten Anordnung; und

Berechnens rekonstruierter Eingabepunkte durch Kombinieren der Restdaten (108) und der korrespondierenden Punkte.

9. Verfahren nach Anspruch 8, wobei die korrespondierenden Punkte der parametrisierten Oberfläche gemäß einer Anordnung berechnet werden und die Modellparameter eine Spezifikation der Anordnung umfassen.

10. Verfahren nach Anspruch 8, wobei die vorherbestimmte Anordnung durch eine Adjazenz in einer vorherbestimmten Anordnung bestimmt wird.

11. Verfahren nach Anspruch 8, wobei der Schritt des Kombinierens durch Hinzufügen der Restdaten (108) und der korrespondierenden Punkte durchgeführt wird.

12. Verfahren nach Anspruch 8, wobei die rekonstruierten Eingabepunkte eine dreidimensionale Karte umfassen, und ein Fahrzeug seine Position auf der dreidimensionalen Karte bestimmt, indem von dem Fahrzeug erworbene Daten mit Daten in der dreidimensionalen Karte registriert werden.

13. Verfahren nach Anspruch 12, wobei die von dem Fahrzeug erworbenen Daten eine Punktwolke (101) sind, und das Registrieren ein Vergleichen der von dem Fahrzeug erworbenen Punktwolke (101) mit den rekonstruierten Eingabepunkten, die eine dreidimensionale Karte umfassen, umfasst.

14. Verfahren nach Anspruch 8, wobei eine Teilgruppe von Modellparametern und eine Teilgruppe von Restdaten empfangen und verwendet werden, um eine Teilgruppe von Eingabepunkten zu rekonstruieren, und eine nachfolgende Teilgruppe von zusätzlichen Modellparametern und eine Teilgruppe von zusätzlichen Restdaten empfangen und verwendet werden, um die Teilgruppe von rekonstruierten Eingabepunkten zu verfeinern.

15. Verfahren nach Anspruch 1, ferner umfassend die Schritte des:

Definierens von Rechtecken, die ein zweidimensionales Gitter umfassen;
Zuordnens jedes Eingabepunktes zu einem Index auf dem zweidimensionalen Gitter;
Anpassens, für jedes der Rechtecke, einer parametrisierten Oberfläche an die im Rechteck indexierten Eingabepunkte;
Ermittelns, für jedes der Rechtecke, eines Anpassungsfehlers zwischen der parametrisierten Oberfläche und den in dem Rechteck indexierten Eingabepunkten; und
hierarchischen Aufteilens jedes der Rechtecke in kleinere Rechtecke, falls der Anpassungsfehler über einem vorherbestimmten Schwellenwert liegt.

16. Codierersystem (100) zum Codieren einer organisierten Punktwolke (101), die eine Szene darstellt, wobei jeder Punkt der Punktwolke eine Position in einem dreidimensionalen (3D) Raum ist, das Codierersystem (100) umfassend:

einen Prozessor in Kommunikation mit einem Speicher;
ein im Speicher codiertes Codierer-Modul, wobei das Codierer-Modul konfiguriert ist, eine Punktwolke (101), die eine Szene darstellt, durch Ausführen von Schritten zu codieren, wobei die Schritte umfassen:

Anpassen (102) einer parametrisierten Oberfläche an die durch N Eingabepunkte $\boldsymbol{P}_i$ (101) gebildete Punktwolke (101); wobei vorherbestimmte organisatorische Information (117) in den Anpassungsschritt eingegeben wird, wobei die organisatorische Information (117) eine Spezifikation einer Zuordnung zwischen jedem Eingabepunkt $\boldsymbol{P}_i$ (101) und seiner Position in einer organisatorischen Matrix, einem Vektor oder einer Adresse im Speicher ist; wobei die N Eingabepunkte $\boldsymbol{P}_i$ (101) in dem Speicher oder in der Matrix oder dem Vektor mit M Elementen, Positionen oder Adressen angeordnet und gespeichert sind; wobei die angeordneten Eingabepunkte $\boldsymbol{P}_i$ (101) und Nullpunktplatzhalter kombiniert an M Positionen gespeichert werden, die N Eingabepunkte $\boldsymbol{P}_i$ (101) und M - N Nullpunktplatzhalter umfassen, wobei M größer als N ist;
Generieren einer Gruppe von M Oberflächenmodellpunkten $fm_j$, wobei die M Oberflächenmodellpunkte $fm_j$ in M Speicherplätzen angeordnet und gespeichert sind, welche die gleiche Anzahl und Anordnung von Adressen oder Elementen wie in den M Plätzen enthalten, die N Eingabepunkte $p_i$ (101) und M - N Nullpunktplatzhalter umfassen;
Generieren von Modellparametern (103) aus der parametrisierten Oberfläche;
wobei ein Oberflächenmodell (104) der parametrisierten Oberfläche durch die Gruppe von Punkten

$$\boldsymbol{fm}_j \triangleq \{fm^x_j, fm^y_j, fm^z_j\}, j = \{1, 2, ..., M\} \text{ (106)}$$

dargestellt ist, wobei jeder Punkt $\boldsymbol{fm}_j$ (106) einen diskreten Punkt auf einem kontinuierlichen Oberflächenmodell $f(x,y,z) \triangleq (f^x, f^y, f^z)$ darstellt, wobei $(f^x, f^y, f^z)$ die Position des Oberflächenmodells (104) im kartesischen Raum darstellt;
Berechnen (109) der korrespondierenden Punkte $\boldsymbol{f}_i$ (110) $i = \{1, 2, ..., N\}$, die Positionen auf der parametrisierten Oberfläche haben, die durch die Gruppe von Punkten $\boldsymbol{fm}_j$ durch Auswählen von N Punkten aus den M Oberflächenmodellpunkten $\boldsymbol{fm}_j$ dargestellt ist, wobei jeder korrespondierende Punkt $\boldsymbol{f}_i$ (110) mit jedem Eingabepunkt $p_i$ (101) korrespondiert; wobei die N korrespondierenden Punkte $\boldsymbol{f}_i, i = \{1, 2, ..., N\}$ aus den M Oberflächenmodellpunkten $\boldsymbol{fm}_j, J = \{1, 2, ..., M\}$ so ausgewählt werden, dass die ausgewählten Punkte $\boldsymbol{f}_i$ die Liste von Oberflächenmodellpunkten sind, die mit Positionen im Eingabepunktespeicher korrespondieren, die Nicht-Nullpunkte enthalten;
Berechnen (107) von Restdaten (108) basierend auf den korrespondierenden Punkten $\boldsymbol{f}_i$ (110) und den Eingabepunkten der Punktwolke (101);

Komprimieren der Modellparameter und der Restdaten (108), um codierte Modellparameter und codierte Restdaten (108) zu erhalten; und

Erzeugen eines Bitstroms (116) aus codierten Modellparametern der parametrisierten Oberfläche und den codierten Restdaten (108);

wobei der Schritt des Komprimierens Transformations- und Quantisierungsschritte umfasst.

17. Nicht transitorisches, computerlesbares Aufzeichnungsmedium, auf dem ein Programm zum Codieren einer organisierten Punktwolke (101), die eine Szene darstellt, gespeichert ist, wobei jeder Punkt der Punktwolke (101) eine Position in einem dreidimensionalen (3D) Raum ist, wobei das Programm, bei Ausführung durch einen Prozessor, den Prozessor veranlasst, Schritte auszuführen:

Anpassen (102) einer parametrisierten Oberfläche an die durch N Eingabepunkte $p_i$ (101) gebildete Punktwolke (101); wobei vorherbestimmte organisatorische Information (117) in den Anpassungsschritt eingegeben wird, wobei die organisatorische Information (117) eine Spezifikation einer Zuordnung zwischen jedem Eingabepunkt $p_i$ (101) und seiner Position in einer organisatorischen Matrix, einem Vektor oder einer Adresse im Speicher ist; wobei die N Eingabepunkte $p_i$ (101) in dem Speicher oder in der Matrix oder dem Vektor mit M Elementen, Positionen oder Adressen angeordnet und gespeichert sind; wobei die angeordneten Eingabepunkte $p_i$ (101) und Nullpunktplatzhalter kombiniert an M Positionen gespeichert werden, die N Eingabepunkte $p_i$ (101) und M - N Nullpunktplatzhalter umfassen, wobei M größer als N ist;

Generieren einer Gruppe von M Oberflächenmodellpunkten $fm_j$, wobei die M Oberflächenmodellpunkte $fm_j$ in M Speicherplätzen angeordnet und gespeichert sind, welche die gleiche Anzahl und Anordnung von Adressen oder Elementen wie in den M Plätzen enthalten, die N Eingabepunkte $p_i$ (101) und M - N Nullpunktplatzhalter umfassen;

Generieren von Modellparametern aus der parametrisierten Oberfläche;

wobei ein Oberflächenmodell (104) der parametrisierten Oberfläche durch die Gruppe von Punkten

$$\boldsymbol{fm}_j \triangleq \{fm^x{}_j, fm^y{}_j, fm^z{}_j\}, \, j = \{1, 2, \ldots, M\}$$ (106) dargestellt wird, wobei jeder Punkt $\boldsymbol{fm}_j$ (106) einen diskreten

Punkt auf einem kontinuierlichen Oberflächenmodell $f(x,y,z) \triangleq (f^x, f^y, f^z)$ darstellt, wobei $(f^x, f^y, f^z)$ die Position des Oberflächenmodells (104) im kartesischen Raum darstellt;

Berechnen (109) der korrespondierenden Punkte $f_i$ (110) i = {1, 2, ..., N}, die Positionen auf der parametrisierten Oberfläche haben, die durch die Gruppe von Punkten $\boldsymbol{fm}_j$ durch Auswählen von N Punkten aus den M Oberflächenmodellpunkten $\boldsymbol{fm}_j$ dargestellt ist, wobei jeder korrespondierende Punkt $f_i$ (110) mit jedem Eingabepunkt $p_i$ (101) korrespondiert; wobei die N korrespondierenden Punkte $f_i$, i = {1, 2, N} aus den M Oberflächenmodellpunkten $\boldsymbol{fm}_j$, J = {1, 2, ..., M} so ausgewählt werden, dass die ausgewählten Punkte $f_i$ die Liste von Oberflächenmodellpunkten sind, die mit Positionen im Eingabepunktespeicher korrespondieren, die Nicht-Nullpunkte enthalten;

Berechnen (107) von Restdaten (108) basierend auf den korrespondierenden Punkten $f_i$ (110) und den Eingabepunkten der Punktwolke (101);

Komprimieren der Modellparameter (108) und der Restdaten, um codierte Modellparameter und codierte Restdaten (108) jeweils zu erhalten; und

Erzeugen eines Bitstroms (116) aus den codierten Modellparametern der parametrisierten Oberfläche und den codierten Restdaten (108);

wobei der Schritt des Komprimierens Transformations- und Quantisierungsschritte umfasst.

**Revendications**

1. Procédé de codage d'un nuage de points organisé (101) représentant une scène à l'aide d'un codeur (100) comprenant un processeur en communication avec une mémoire, dans lequel chaque point du nuage de points est un emplacement dans un espace tridimensionnel (3D), le procédé comprenant les étapes de :

adaptation (102) d'une surface paramétrée au nuage de points (101) formé par N points d'entrée $p_i$ (101) ; dans lequel des informations organisationnelles prédéterminées (117) sont entrées dans l'étape d'adaptation, dans lequel les informations organisationnelles (117) sont une spécification d'une correspondance entre chaque point d'entrée $p_i$ (101) et son emplacement dans une matrice organisationnelle, un vecteur ou une adresse dans la mémoire ; dans lequel les N points d'entrée $p_i$ (101) sont agencés et stockés dans la mémoire ou dans la matrice ou le vecteur ayant M éléments, emplacements ou adresses ; dans lequel les points d'entrée $p_i$ (101)

agencés et les caractères de remplacement des points nuls sont stockés ensemble dans M emplacements comprenant N points d'entrée $p_i$ (101) et M - N emplacements de points nuls, où M est plus grand que N ;

génération d'un ensemble de M points de modèle de surface $fm_j$, dans lequel les M points de modèle de surface $fm_j$ sont agencés et stockés dans M emplacements de mémoire contenant le même nombre et le même agencement d'adresses ou d'éléments que dans lesdits M emplacements comprenant N points d'entrée $pi$ (101) et M - N espaces réservés de points nuls ;

génération de paramètres de modèle (103) à partir de la surface paramétrée ;

dans lequel un modèle de surface (104) de la surface paramétrée est représenté par l'ensemble de points $fm_j$ $\{fm^x_j, fm^y_j, fm^z_j\}$, $j = \{1, 2, ..., M\}$ (106), où chaque point $fm_j$ (106) représente un point discret sur un modèle de surface continue $f(x,y,z)$ $(f^x, f^y, f^z)$, où $(f^x, f^y, f^z)$ représente l'emplacement du modèle de surface (104) dans l'espace cartésien ;

calcul (109) de points correspondants $f_i$ (110) $i = \{1, 2, ..., N\}$ ayant des emplacements sur la surface paramétrée représentés par l'ensemble de points $fm_j$ en sélectionnant N points parmi les M points de modèle de surface $fm_j$, dans lequel chaque point correspondant $f_i$ (110) correspond à chaque point d'entrée $p_i$ (101) ; dans lequel les N points correspondants $f_i$, $i = \{1, 2, ..., N\}$ sont sélectionnés parmi les M points de modèle de surface $fm_j$, $J = \{1, 2, ..., M\}$ de sorte que les points sélectionnés $f_i$ soient la liste des points de modèle de surface correspondant aux emplacements dans la mémoire des points d'entrée qui contiennent des points non nuls ;

calcul (107) de données résiduelles (108) sur la base des points correspondants $f_i$ (110) et des points d'entrée du nuage de points (101) ;

compression des paramètres de modèle (103) et des données résiduelles pour produire des paramètres de modèle codés et des données résiduelles codées (108) ; et

production d'un flux binaire (116) à partir des paramètres de modèle codés (103) de la surface paramétrée et des données résiduelles codées (108) ;

dans lequel l'étape de compression comprend des étapes de transformation et de quantification.

2. Procédé selon la revendication 1, dans lequel les données résiduelles (108) représentent les distances entre les points correspondants (106) et les points d'entrée.

3. Procédé selon la revendication 1, dans lequel les points d'entrée et les points correspondants (106) comprennent des attributs.

4. Procédé selon la revendication 3, dans lequel les attributs comprennent des informations de couleur.

5. Procédé selon la revendication 1, dans lequel l'étape de compression comprend le codage entropique (115).

6. Procédé selon la revendication 1, dans lequel l'étape de génération de paramètres de modèle est effectuée pendant l'étape d'adaptation.

7. Procédé selon la revendication 1, dans lequel l'étape de calcul des données résiduelles (108) est une différence entre les composantes des points correspondants (106) et les composantes correspondantes des points d'entrée du nuage de points (101).

8. Procédé selon la revendication 1, comprenant en outre les étapes de :

réception des paramètres de modèle (103) pour la surface paramétrée ;
réception des données résiduelles (108) ;
détermination de la surface paramétrée à l'aide des paramètres de modèle (103) ;
calcul des points correspondants de la surface paramétrée selon un agencement prédéterminé ; et
calcul des points d'entrée reconstruits en combinant les données résiduelles (108) et les points correspondants.

9. Procédé selon la revendication 8, dans lequel les points correspondants de la surface paramétrée sont calculés selon un agencement et les paramètres de modèle comprennent une spécification de l'agencement.

10. Procédé selon la revendication 8, dans lequel l'agencement prédéterminé est déterminé par une adjacence dans un agencement prédéterminé.

11. Procédé selon la revendication 8, dans lequel l'étape de combinaison est réalisée en ajoutant les données résiduelles (108) et les points correspondants.

**12.** Procédé selon la revendication 8, dans lequel les points d'entrée reconstruits comprennent une carte tridimensionnelle, et un véhicule détermine sa position sur la carte tridimensionnelle en enregistrant les données acquises du véhicule avec les données de la carte tridimensionnelle.

**13.** Procédé selon la revendication 12, dans lequel les données acquises du véhicule sont un nuage de points (101), et l'enregistrement comprend une comparaison du nuage de points (101) acquis par le véhicule aux points d'entrée reconstruits comprenant une carte tridimensionnelle.

**14.** Procédé selon la revendication 8, dans lequel un sous-ensemble de paramètres de modèle et un sous-ensemble de données résiduelles sont reçus et sont utilisés pour reconstruire un sous-ensemble de points d'entrée, et un sous-ensemble ultérieur de paramètres de modèle supplémentaires et un sous-ensemble de données résiduelles supplémentaires sont reçus et sont utilisés pour affiner le sous-ensemble de points d'entrée reconstruits.

**15.** Procédé selon la revendication 1, comprenant en outre les étapes de :

définition de rectangles qui englobent une grille à deux dimensions ;
association de chaque point d'entrée à un index sur la grille à deux dimensions ;
adaptation, pour chacun des rectangles, d'une surface paramétrée sur les points d'entrée indexés dans le rectangle ;
mesure, pour chacun des rectangles, d'une erreur d'adaptation entre la surface paramétrée et les points d'entrée indexés dans le rectangle ; et
partitionnement hiérarchique de chacun des rectangles en rectangles plus petits si l'erreur d'adaptation est supérieure à un seuil prédéterminé.

**16.** Système codeur (100) pour coder un nuage de points organisé (101) représentant une scène, dans lequel chaque point du nuage de points est un emplacement dans un espace tridimensionnel (3D), le système codeur (100) comprenant :

un processeur en communication avec une mémoire ;
un module codeur stocké dans la mémoire, le module codeur étant configuré pour coder un nuage de points (101) représentant une scène en effectuant des étapes, dans lequel les étapes comprennent :

l'adaptation (102) d'une surface paramétrée au nuage de points (101) formé par N points d'entrée $P_i$ (101) ; dans lequel des informations organisationnelles prédéterminées (117) sont entrées dans l'étape d'adaptation, dans lequel les informations organisationnelles (117) sont une spécification d'une correspondance entre chaque point d'entrée $P_i$ (101) et son emplacement dans une matrice organisationnelle, un vecteur ou une adresse dans la mémoire ; dans lequel les N points d'entrée $P_i$ (101) sont agencés et stockés dans la mémoire ou dans la matrice ou le vecteur ayant M éléments, emplacements ou adresses ; dans lequel les points d'entrée agencés $P_i$ (101) et les espaces réservés de points nuls sont stockés ensemble dans M emplacements comprenant N points d'entrée $P_i$ (101) et M - N espaces réservés de points nuls, où M est plus grand que N ;
génération d'un ensemble de M points de modèle de surface $fm_j$, dans lequel les M points de modèle de surface $fm_j$ sont agencés et stockés dans M emplacements de mémoire contenant le même nombre et le même agencement d'adresses ou d'éléments que dans lesdits M emplacements comprenant N points d'entrée $p_i$ (101) et M - N espaces réservés de points nuls ;
génération de paramètres de modèle (103) à partir de la surface paramétrée ;
dans lequel un modèle de surface (104) de la surface paramétrée est représenté par l'ensemble de points $fm_j$ $\{fm^x_j, fm^y_j, fm^z_j\}$, $j = \{1, 2, ..., M\}$ (106), où chaque point $fm_j$ (106) représente un point discret sur un modèle de surface continue $f(x,y,z)$ $(f^x, f^y, f^z)$, où $(f^x, f^y, f^z)$ représente l'emplacement du modèle de surface (104) dans l'espace cartésien ;
le calcul (109) des points correspondants $f_i$ (110) $i = \{1, 2, ..., N\}$ ayant des emplacements sur la surface paramétrée représentés par l'ensemble de points $fm_j$ en sélectionnant N points parmi les M points de modèle de surface $fm_j$, dans lequel chaque point correspondant $f_i$ (110) correspond à chaque point d'entrée $p_i$ (101) ; dans lequel les N points correspondants $f_i$, $i = \{1, 2, ..., N\}$ sont sélectionnés parmi les M points de modèle de surface $fm_j$ $j = \{1, 2, ..., M\}$ de sorte que les points sélectionnés $f_i$ soient la liste des points de modèle de surface correspondant aux emplacements dans la mémoire des points d'entrée qui contiennent des points non nuls ;
calcul (107) de données résiduelles (108) sur la base des points correspondants $f_i$ (110) et des points d'entrée du nuage de points (101) ;
la compression des paramètres de modèle et des données résiduelles (108) pour produire des paramètres de modèle codés et des données résiduelles codées (108), respectivement ; et
la production d'un flux binaire (116) à partir des paramètres de modèle de la surface paramétrée et des données résiduelles codées (108) ;
dans lequel l'étape de compression comprend des étapes de transformation et de quantification.

17. Support d'enregistrement non transitoire lisible par ordinateur stockant un programme pour coder un nuage de points organisé (101) représentant une scène, dans lequel chaque point du nuage de points (101) est un emplacement dans un espace tridimensionnel (3D), lorsqu'il est exécuté par un processeur, le programme amène le processeur à effectuer les étapes de :

adaptation (102) d'une surface paramétrée au nuage de points (101) formé par N points d'entrée $p_i$ (101) ; dans lequel des informations organisationnelles prédéterminées (117) sont entrées dans l'étape d'adaptation, dans lequel les informations organisationnelles (117) sont une spécification d'une correspondance entre chaque point d'entrée $p_i$ (101) et son emplacement dans une matrice organisationnelle, un vecteur ou une adresse dans la mémoire ; dans lequel les N points d'entrée $p_i$ (101) sont agencés et stockés dans la mémoire ou dans la matrice ou le vecteur ayant M éléments, emplacements ou adresses ; dans lequel les points d'entrée $p_i$ (101) agencés et les caractères de remplacement des points nuls sont stockés ensemble dans M emplacements comprenant N points d'entrée $p_i$ (101) et M - N emplacements de points nuls, où M est plus grand que N ;
génération d'un ensemble de M points de modèle de surface $fm_j$, dans lequel les M points de modèle de surface $fm_j$ sont agencés et stockés dans M emplacements de mémoire contenant le même nombre et le même agencement d'adresses ou d'éléments que dans lesdits M emplacements comprenant N points d'entrée $p_i$ (101) et M - N espaces réservés de points nuls ;
génération de paramètres de modèle à partir de la surface paramétrée ;
dans lequel un modèle de surface (104) de la surface paramétrée est représenté par l'ensemble de points $fm_j$ $\{fm^x_j, fm^y_j, fm^z_j\}$, j = {1, 2, ..., M} (106), où chaque point $fm_j$ (106) représente un point discret sur un modèle de surface continue $f(x,y,z)$ $(f^x, f^y, f^z)$ où $(f^x, f^y, f^z)$ représente l'emplacement du modèle de surface (104) dans l'espace cartésien ;
en calculant (109) les points correspondants $f_i$ (110) i = {1, 2, ..., N} ayant des emplacements sur la surface paramétrée représentée par l'ensemble des points $fm_j$ en sélectionnant N points parmi les M points du modèle de surface $fm_j$ où chaque point correspondant $f_i$ (110) correspond à chaque point d'entrée $p_i$ (101) ; dans lequel les N points correspondants $f_i$, i = {1, 2, N} sont sélectionnés parmi les M points du modèle de surface $fm_j$, J = {1,2, ..., M} de telle sorte que les points sélectionnés $f_i$ constituent la liste des points du modèle de surface correspondant aux emplacements de la mémoire des points d'entrée qui contiennent des points non nuls ;
calcul (107) de données résiduelles (108) sur la base des points correspondants $f_i$ (110) et des points d'entrée du nuage de points (101) ;
compression des paramètres de modèle et des données résiduelles (108) pour produire des paramètres de modèle codés et des données résiduelles codées (108), respectivement ; et
production d'un flux binaire (116) à partir des paramètres de modèle codés de la surface paramétrée et des données résiduelles codées (108) ;
dans lequel l'étape de compression comprend des étapes de transformation et de quantification.

[Fig. 1]

$$p_i \triangleq \{x_i, y_i, z_i\}, i = \{1, 2, \ldots, N\}$$

**100** encoder

- 116 Bit-stream
- 115 entropy coder
- 114 Quantized transform coefficients
- 113 quantize
- 112 transform coefficients
- 111 transform
- 108 residuals (prediction errors)

$$r_i \triangleq \{r^x_i, r^y_i, r^z_i\}, i = \{1, 2, \ldots, N\}$$
$$= \{x_i - f^x_i, y_i - f^y_i, z_i - f^z_i\}, i = \{1, 2, \ldots, N\}$$

- 107 compute residuals (prediction error)
- 117 organizational information
- 103 model parameters
- 105 continuous: $f(x,y,z) \triangleq (f^x, f^y, f^z)$
- 106 discrete: $fm_j \triangleq \{fm^x_j, fm^y_j, fm^z_j\}, j = \{1, 2, \ldots, M\}$
- 109 compute corresponding points on surface model
- 101 point cloud
- 102 surface model fitting
- 104 surface model
- 110 $f_i \triangleq \{f^x_i, f^y_i, f^z_i\}, i = \{1, 2, \ldots, N\}$

[Fig. 2]

**200** process for computing correspondence between the model and the point locations (point cloud) for organized point clouds

**101**

S1 — Given $N$ input points $p_i \triangleq \{x_i, y_i, z_i\}$, $i = \{1, 2, \ldots, N\}$
**201**

S2 — Arrange and store the $N$ points into $M$ memory (or matrix) locations, where $M \geq N$
**202**

S3 — Store a "null point" placeholder $\emptyset$ into memory locations which do not contain input points
**203**

S4 — Generate $M$ surface model points $fm_j \triangleq \{fm_j^x, fm_j^y, fm_j^z\}$, $j = \{1, 2, \ldots, M\}$
**106**
**204**

S5 — Arrange and store the $M$ surface model points into $M$ memory (or matrix) locations
**205**

S6 — Select $N$ corresponding points $f_i$, $i = \{1, 2, \ldots, N\}$ from the $M$ surface model points $fm_j$, $j = \{1, 2, \ldots, M\}$ such that the selected points $f_i$ are the list of surface model points corresponding to locations in the input point memory that contain non-null points.

**210**

| $p_1$ |
| $p_2$ |
| $p_3$ |
| $p_4$ |
| $\emptyset$ |
| $\emptyset$ |
| $p_5$ |
| $p_6$ |
| $p_7$ |
| $p_8$ |
| $\emptyset$ |
| $\emptyset$ |

**211**

| $fm_1$ |
| $fm_2$ |
| $fm_3$ |
| $fm_4$ |
| $fm_5$ |
| $fm_6$ |
| $fm_7$ |
| $fm_8$ |
| $fm_9$ |
| $fm_{10}$ |
| $fm_{11}$ |
| $fm_{12}$ |

**212**

$f_1 = fm_1$
$f_2 = fm_2$
$f_3 = fm_3$
$f_4 = fm_4$

$f_5 = fm_7$
$f_6 = fm_8$
$f_7 = fm_9$
$f_8 = fm_{10}$

[Fig. 3]

EP 3 501 005 B1

Given $N$ input points $p_i \triangleq \{x_i, y_i, z_i\}$, $i = \{1, 2, \ldots, N\}$

$\curvearrowright$ 301

101

**300** process for computing correspondence between the model and the point locations (point cloud) for unorganized point clouds

Given parameters $(u_i, v_i)$, $i = \{1, 2, \ldots, N\}$, which are used to generate the surface model for corresponding input points $p_i$

$\curvearrowright$ 303

For each parameter $(u_i, v_i)$, compute, using the surface model, a point location $fm_i \triangleq \{fm^x_i, fm^y_i, fm^z_i\}$ on the surface model corresponding to input point $p_i$, $i = \{1, 2, \ldots, N\}$

$\curvearrowright$ 305

Set the list of corresponding points $f_i$ of the surface model to be the same as $fm_i$ : $f_i = fm_i$, $i = \{1, 2, \ldots, N\}$

$\curvearrowright$ 310  $\curvearrowright$ 320  $\curvearrowright$ 311  $\curvearrowright$ 312

$$
\begin{bmatrix} p_1 \\ p_2 \\ p_3 \\ p_4 \\ p_5 \\ p_6 \\ p_7 \\ p_8 \\ p_9 \\ p_{10} \\ p_{11} \\ p_{12} \end{bmatrix}
\begin{bmatrix} (u_1, v_1) \\ (u_2, v_2) \\ (u_3, v_3) \\ (u_4, v_4) \\ (u_5, v_5) \\ (u_6, v_6) \\ (u_7, v_7) \\ (u_8, v_8) \\ (u_9, v_9) \\ (u_{10}, v_{10}) \\ (u_{11}, v_{11}) \\ (u_{12}, v_{12}) \end{bmatrix}
\begin{bmatrix} fm_1 \\ fm_2 \\ fm_3 \\ fm_4 \\ fm_5 \\ fm_6 \\ fm_7 \\ fm_8 \\ fm_9 \\ fm_{10} \\ fm_{11} \\ fm_{12} \end{bmatrix}
\begin{bmatrix} f_1 = fm_1 \\ f_2 = fm_2 \\ f_3 = fm_3 \\ f_4 = fm_4 \\ f_5 = fm_5 \\ f_6 = fm_6 \\ f_7 = fm_7 \\ f_8 = fm_8 \\ f_9 = fm_9 \\ f_{10} = fm_{10} \\ f_{11} = fm_{11} \\ f_{12} = fm_{12} \end{bmatrix}
$$

24

[Fig. 4]

**400** process for computing residual between the point locations (point cloud) and the corresponding points of the surface model

**210** Given the arranged $N$ points $p_i$, $i = \{1, 2, …, N\}$ and null point placeholders

**110** Given the $N$ corresponding points $f_i$, $i = \{1, 2, …, N\}$ from the surface model

**440** Compute the residuals $r_i$, $i = \{1, 2, …, N\}$ as the difference between each point $p_i$ and corresponding point $f_i$ from the surface model, using:
$r_i = \{x_i - f_i^x, y_i - f_i^y, z_i - f_i^z\}$, $i = \{1, 2, …, N\}$

**430**

$$
\begin{bmatrix} p_1 \\ p_2 \\ p_3 \\ p_4 \\ \emptyset \\ \emptyset \\ p_5 \\ p_6 \\ p_7 \\ p_8 \\ \emptyset \\ \emptyset \end{bmatrix}
\qquad
\begin{bmatrix} f_1 \\ f_2 \\ f_3 \\ f_4 \\ \\ \\ f_5 \\ f_6 \\ f_7 \\ f_8 \end{bmatrix}
$$

**441**

$$
\begin{bmatrix}
r_1 = p_1 - f_1 \\
r_2 = p_2 - f_2 \\
r_3 = p_3 - f_3 \\
r_4 = p_4 - f_4 \\
\emptyset \\
\emptyset \\
r_5 = p_5 - f_5 \\
r_6 = p_6 - f_6 \\
r_7 = p_7 - f_7 \\
r_8 = p_8 - f_8 \\
\emptyset \\
\emptyset
\end{bmatrix}
$$

[Fig. 5]

Bit-stream

116  model parameters ⌐ 103

⌐ 515

**500   decoding process**

entropy decoder

⌐ 515

surface model generator

⌐ 104

⌐ 114 quantized transform coefficients

surface model

continuous: $f(x,y,z) \triangleq (f^x, f^y, f^z)$ ⌐ 105

⌐ 513

discrete: $fm_j \triangleq \{fm^x_j, fm^y_j, fm^z_j\}, j = \{1, 2, ..., M\}$ ⌐ 106

inverse quantize

⌐ 512 inverse quantized transform coefficients

compute corresponding points on surface model ⌐ 109

$f_i \triangleq \{f^x_i, f^y_i, f^z_i\}, i = \{1, 2, ..., N\}$ ⌐ 110

⌐ 511

inverse transform

⌐ 507

combiner

reconstructed point cloud ⌐ 501

⌐ 508 reconstructed residuals

$\hat{r}_i \triangleq \{\hat{r}^x_i, \hat{r}^y_i, \hat{r}^z_i\}, i = \{1, 2, ..., N\}$

$\hat{p}_i \triangleq \{\hat{x}_i, \hat{y}_i, \hat{z}_i\}, i = \{1, 2, ..., N\}$
$= \{\hat{r}^x_i + f^x_i, \hat{r}^y_i + f^y_i, \hat{r}^z_i + f^z_i\}, i = \{1, 2, ..., N\}$

EP 3 501 005 B1

[Fig. 6]

600 hierarchical partitioning process

**EP 3 501 005 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090018801 A1